(19) Europäisches Patentamt
European Patent Office
Office européen des brevets

(11) EP 3 175 889 B1

(12) EUROPÄISCHE PATENTSCHRIFT

(45) Veröffentlichungstag und Bekanntmachung des Hinweises auf die Patenterteilung:
**03.11.2021 Patentblatt 2021/44**

(21) Anmeldenummer: **15197405.2**

(22) Anmeldetag: **02.12.2015**

(51) Int Cl.:
***A62D 3/33*** *(2007.01)*
***B09B 3/00*** *(2006.01)*
***C04B 18/04*** *(2006.01)*
***C04B 18/06*** *(2006.01)*
***C04B 18/08*** *(2006.01)*
***F27B 7/10*** *(2006.01)*
***F27D 7/02*** *(2006.01)*
*A62D 101/24 (2007.01)*
*A62D 101/43 (2007.01)*

(54) **VORRICHTUNG UND VERFAHREN ZUR CARBONATISIERUNG VON ALKALISCHEN FESTSTOFFEN**

DEVICE AND METHOD FOR CARBONATION OF ALKALINE SOLIDS

DISPOSITIF ET PROCEDE DE CARBONATATION DE SOLIDES ALCALINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.06.2017 Patentblatt 2017/23**

(73) Patentinhaber:
- **Technische Hochschule Mittelhessen
35390 Giessen (DE)**
- **Stadtwerke Gießen AG
35398 Gießen (DE)**

(72) Erfinder:
- **Weigand, Harald
86316 Friedberg (DE)**
- **Paul, Reinhard
35435 Wettenberg (DE)**
- **Fink, Matthias
35418 Buseck-Beuern (DE)**
- **Funk, Matthias
35425 Wettenberg (DE)**

(74) Vertreter: **Stumpf, Peter
c/o TransMIT GmbH
Kerkrader Strasse 3
35394 Gießen (DE)**

(56) Entgegenhaltungen:
**WO-A2-2014/088413 JP-A- 2003 145 091**

- **Oliver Schiffmann ET AL: "Rückstände aus der thermischen Altholz-Behandlung Rückstände aus der thermischen Behandlung von Altholz - Herausforderungen und Lösungsansätze -", , 30. November 2015 (2015-11-30), XP055274978, Gefunden im Internet: URL:http://vivis.de/phocadownload/2014_mna/2014_mna_261_272_schiffmann-goldmann.pdf [gefunden am 2016-05-24]**
- **Obernberger Ingwald: "Aschen aus Biomassefeuerungen - Zusammensetzung und Verwertung", , 1. Januar 1997 (1997-01-01), Seiten 199-222, XP055274969, Gefunden im Internet: URL:http://www.bios-bioenergy.at/uploads/media/Paper-Obernberger-BiomasseaschenVerwe rtung-1997-05-20.pdf [gefunden am 2016-06-02]**
- **J Steketee ET AL: "Accelerated carbonation and washing of MSWI bottom ash: from laboratory to full scale", , 31. Dezember 2009 (2009-12-31), XP055277669, Gefunden im Internet: URL:http://www.insavalor.fr/wascon2009/fichiers_envoyes/Jaap%20Steketee%20AccCarbona tion.pdf [gefunden am 2016-06-03]**
- **JELENA TODOROVIC ET AL: "Artificial carbonation for controlling the mobility of critical elements in bottom ash", JOURNAL OF MATERIAL CYCLES AND WASTE MANAGEMENT, SPRINGER JAPAN KK, JP, Bd. 8, Nr. 2, 1. September 2006 (2006-09-01), Seiten 145-153, XP019432030, ISSN: 1611-8227, DOI: 10.1007/S10163-006-0153-X**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

• Shu-Yuan Pan ET AL: "Process Intensification of Steel Slag Carbonation via a Rotating Packed Bed: Reaction Kinetics and Mass Transfer", Energy Procedia, vol. 63, 1 January 2014 (2014-01-01), pages 2255-2260, XP055663772, NL ISSN: 1876-6102, DOI: 10.1016/j.egypro.2014.11.244

## Beschreibung

### Technisches Gebiet der Erfindung

Die Erfindung bezieht sich auf eine Vorrichtung und ein Verfahren zur Carbonatisierung von Rostaschen und anderer alkalischer Feststoffe mit dem Ziel einer kostenoptimierten Entsorgung oder einer baustofflichen Verwendung.

### Stand der Technik

Rostaschen, beispielsweise Müllverbrennungsaschen, weisen als alkalische Materialien (ca. pH 13) Eigenschaften einer $CO_2$-Falle auf, d.h. die basischen Anteile der Rostaschen, Metalloxide und -hydroxide, insbesondere Calciumhydroxid, binden Kohlendioxid aus der umgebenden Atmosphäre, der Umgebungsluft, und gehen dabei in die entsprechenden Metallcarbonate über. Als Rostaschen werden im Rahmen dieser Offenbarung feste Verbrennungsrückstände verstanden, die nicht mit dem Abgasstrom eines Verbrennungsprozesses ausgetragen werden.

Als "alkalische Materialien" bzw. synonym als "alkalische Feststoffe" werden Feststoffe bezeichnet, die in Kontakt mit Wasser den pH-Wert des kontaktierten Wassers erhöhen.

Diese Carbonatisierung alkalischer Feststoffe, insbesondere Rostaschen, ist seit den 1990er Jahren Gegenstand intensiver Forschung. Obwohl die dahinterstehenden Prozesse und Nebenreaktionen weitgehend aufgeklärt werden konnten, ist eine vollmaßstäbliche technische Umsetzung eines beschleunigten Prozesses bislang nicht erfolgt. Die Carbonatisierung wird bislang im Rahmen des Managements von Müllverbrennungsanlagen durch eine mindestens drei Monate andauernde Aschealterung an Umgebungsluft durchgeführt, indem die Asche chargenweise aufgeschüttet und von Zeit zu Zeit umgeschichtet wird. Dabei nimmt die Rostasche Kohlendioxid aus der Umgebungsluft auf. Der für dieses Verfahren der Aschealterung im Rahmen des Stands der Technik notwendige Zeitbedarf erfordert es, ausreichende Lagerkapazitäten vorzuhalten, damit sämtliche anfallende Rostasche behandelt werden kann. Zudem erfolgt die Umschichtung manuell mittels Radlader. Dies ist zum einen aufgrund des Personalbedarfs sehr kostenintensiv, zum anderen herrschen in den aufgehäuften Rostaschen grundsätzlich keine optimalen Bedingungen für die Carbonatisierung: Bei diesem natürlichen Alterungsprozeß der Asche diffundiert atmosphärisches $CO_2$ in den Porenraum und reagiert mit darin enthaltenem Calciumhydroxid ($Ca(OH)_2$) zu Calciumcarbonat ($CaCO_3$). Durch den Prozeß der Co-Fällung von Schwermetallen, z.B. Pb, sowie durch die mit der Carbonatisierung einhergehende Absenkung des pH-Wertes mindert sich die Auslaugfähigkeit von Schwermetallen, was die Deponiefähigkeit der Asche sowie deren bautechnische Eigenschaften verbessert. Es ist im Stand der Technik nicht möglich, diese positiven Veränderungen durch die Carbonatisierung vollständig und in definierter Form durchzuführen. Gemäß Stand der Technik carbonatisierte Aschen weisen daher keinen einheitlichen Carbonatisierungsgrad und damit auch keine einheitlich-konstanten baustoffrelevanten Eigenschaften auf. Entsprechend behandelte Aschen können daher nur in sehr begrenztem Umfange einer weiteren Verwertung zugeführt werden. Stattdessen werden sie im Stand der Technik auf Deponien der Deponieklasse DK II oder höher entsorgt.

Die Schrift "Rückstände aus der thermischen Behandlung von Altholz" von O. Schiffmann et al., herausgegeben vom TK-Verlag, offenbart ein Verfahren zur Carbonatisierung von Rost- und Kesselaschen, in dem eine statische Aufschüttung von Rost- bzw. Kesselaschen von kohlendioxidhaltigem Abgas durchströmt wird. Dabei treten zwangsläufig Bereiche in der Aufschüttung auf, die nur unzureichend mit dem Abgas in Berührung kommen, da sich bei dieser Anordnung Strömungspfade des Abgases in der statischen Aufschüttung einstellen, bei denen nicht die gesamte Aufschüttung gleichmäßig durch die kohlendioxidhaltigen Abgase durchströmt wird.

In WO 2014/088413 A2 wird ein Verfahren für die Behandlung fester alkalischer Rückstände, die Calcium, Schwermetalle und Phosphat enthalten, offenbart, sowie auch die Verwendung von entsprechend carbonatisierten Feststoffen als Baustoffe. Auch dieses Verfahren arbeitet jedoch nur mit einer statischen Aufschüttung der alkalischen Rückstände.

Die in JP 2003 145091 A beschriebene Vorrichtung weist eine zylindrische Reaktorkammer auf, diese ist jedoch nicht drehbar ausgeführt. Lediglich eine in dem zylindrischen Reaktor zentral positionierte und massiv ausgeführte Welle ist drehbar gelagert und aus der zylindrischen Reaktorkammer herausgeführt, um den Reaktorinhalt mittels daran befestigter Misch- und Knetvorrichtungen zu durchmischen. Diese Vorrichtung dient somit der Behandlung pastöser Massen, beispielsweise wässriger Suspensionen feinkörniger Flugaschen und ist nicht geeignet für die Behandlung von grobkörnigen Rostaschen aus der Müllverbrennung.

Die Publikation "Process Intensification of Steel Slag Carbonation via a Rotating Packed Bed: Reaction Kinetics and Mass Transfer" von Yuan Pan et al., erschienen in Energy Procedia, Bd. 63, 1. Januar 2014, Seiten 2255-2260, offenbart ein Verfahren zur Carbonatisierung alkalischer Feststoffe unter Verwendung eines schnell rotierenden Festbettes, wobei die zu prozessierenden Feststoffe (Aschen) in einer entsprechenden Halterung fixiert sind. Es handelt sich um einen drehbaren Festbettreaktor, der keinerlei Vermischung der zu prozessierenden Feststoffe gestattet, sondern diese nur in fixierter Form durch die umgebende Gasatmosphäre bewegt.

Als weiteren Nachteil des im Stand der Technik bekannten Verfahrens ist zu nennen, dass das bekannte Verfahren keine Möglichkeit bietet, die Auslaugeigenschaften des gealterten Materials zu beeinflussen.

**Aufgabe**

Aufgabe der Erfindung ist es, mit Hilfe von Kohlendioxid die Dauer des Alterungsvorganges von alkalischen Feststoffen, insbesondere von Rostaschen, zu verkürzen.

Diese Aufgabe wird durch das erfindungsgemäße Verfahren mit den kennzeichnenden Merkmalen des unabhängigen Anspruchs 1 sowie die erfindungsgemäße Vorrichtung mit den kennzeichnenden Merkmalen des unabhängigen Anspruchs 12 jeweils alleine oder in Kombination miteinander gelöst. Die abhängigen Ansprüche 2 bis 11 und 13 zeigen weitere vorteilhafte Ausgestaltungen des erfindungsgemäßen Verfahrens, bzw. der erfindungsgemäßen Vorrichtung.

Der für die Aschealterung (Carbonatisierung) im Stand der Technik bisher notwendige Zeitbedarf wird so drastisch gekürzt, und es ist nicht mehr notwendig, entsprechende Lagerkapazitäten vorzuhalten. Außerdem kann der carbonatisierte Feststoff als Baustoff verwendet werden. Die Carbonatisierung ist der wesentliche Teil dieses Alterungsvorganges, so dass im Folgenden die Begriffe "Alterung", "Aschealterung", "Carbonatisierung" usw. synonym verwendet werden. Da alkalische Feststoffe neben Rostaschen noch weitere Substanzen und Substanzgemische umfassen, die mit dem erfindungsgemäßen Verfahren behandelt werden können, ist der Begriff "Rostasche" im Folgenden nicht einschränkend zu verstehen, sondern jeweils beispielhaft als ein erfindungsgemäß behandelbarer alkalischer Feststoff.

Als "Eluate" werden nachfolgend wässrige Extrakte der alkalischen Feststoffe oder der carbonatisierten Feststoffe bezeichnet, die nach den Normen DIN-DEV S4, DIN EN 12457-4, DIN 38414-4, DIN 19528 oder DIN 19529 angefertigt werden. "S4-Eluate" bezeichnet dabei explizit nach DIN-DEV S4 angefertigte Eluate, "Säuleneluat" bezeichnet dabei explizit nach DIN 19528 (Säulenversuch) angefertigte Eluate.

Als Produkt des erfindungsgemäßen Verfahrens wird ein carbonatisierter Feststoff erhalten, d. h. ein Feststoff dessen chemische Zusammensetzung gegenüber dem Edukt im wesentlichen dahingehend verändert ist, dass er größere Anteile Carbonat ($CO_3^{2-}$) enthält als das Edukt.

**Beschreibung**

Das Verfahren wird in einem Reaktor **100** unter Ausschluß der Umgebungsluft durchgeführt.

Das erfindungsgemäße Verfahren ermöglicht es, die Carbonatisierung alkalischer Feststoffe, insbesondere von Rostaschen, in kürzester Zeit so vollständig durchzuführen, dass die geringen Eluatkonzentrationen von Schwermetallen in der erfindungsgemäß carbonatisierten Rostasche - hauptsächlich Pb, Cu und Zn - es ermöglichen, die carbonatisierte Rostasche in günstigere Deponieklassen einzustufen als es im Stand der Technik möglich ist. "Günstig" bedeutet hierbei, dass für zu entsorgende Rostaschen umso geringere Kosten anfallen, je niedriger die Deponieklasse ist, in die sie aufgrund der Eluatkonzentration von Schwermetallen einzuordnen sind. In Deutschland wird die Einordnung in Deponieklassen durch die Deponieverordnung in der jeweils gültigen Fassung geregelt. Die aktuell gültigen Grenzwerte dafür sind in den Spalten "DK 0", "DK I" und "DK II" von Tabelle 3 (Fig. 4B) enthalten. Im Stand der Technik ist es erforderlich, Rostaschen in Deutschland in die Deponieklasse DK II einzuordnen. Unter Verwendung des erfindungsgemäßen Verfahrens ist es möglich, Rostaschen in die Deponieklassen DK I oder DK 0 einzuordnen, was zu deutlich niedrigeren Deponierungskosten führt. Es ist ebenfalls möglich, die erfindungsgemäß carbonatisierte Rostasche einer baustofflichen, bzw. "ersatzbaustofflichen" Verwertung gemäß der jeweils gültigen Ersatzbaustoffverordnung zuzuführen. Die für eine derartige kommerzielle Verwertung in Deutschland gemäß Ersatzbaustoffverordnung aktuell zu erfüllenden Grenzwerte sind in den Spalten "HMVA-1" und "HMVA-2" von Tabelle 3 (Fig. 4B) enthalten. Es ist dem Fachmann bekannt, dass die gesetzlichen Vorgaben für die Deponierung und die Verwendung als Baustoff von Land zu Land in unterschiedlichen Gesetzeswerken geregelt sind und zeitlichen Änderungen unterliegen. Insoweit erfolgt die Benennung deutscher Gesetzeswerke beispielhaft und die Erfindung umfasst auch die Erfüllung der in anderen Ländern gültigen Grenzwerte sowie ebenfalls zukünftiger strengerer Grenzwerte.

Das Verfahren umfasst die Beaufschlagung der alkalischen Feststoffe mit einer $CO_2$-haltigen Gasatmosphäre (Reaktivgas) unter ständiger Bewegung und Durchmischung der zu behandelnden Feststoffe, so dass sich alle in der Reaktorkammer **1** in der Reaktionszone befindlichen Feststoff-Anteile ständig in intensivem Kontakt mit dem $CO_2$ befinden.

Bevorzugt wird das Verfahren daher in einer drehbaren Reaktorkammer **1** durchgeführt, wodurch die gewünschte intensive Vermischung der alkalischen Feststoffe und damit intensiver Kontakt aller Feststofffraktionen mit dem $CO_2$ gewährleistet wird.

Das erfindungsgemäße Verfahren der Carbonatisierung kann sowohl im Batchbetrieb als auch kontinuierlich erfolgen, und zwar sowohl hinsichtlich des mindestens einen alkalischen Feststoffs als auch hinsichtlich der $CO_2$-haltigen Gasatmosphäre. Im kontinuierlichen Betrieb hinsichtlich des mindestens einen alkalischen Feststoffs erfolgt sowohl die Befüllung mit dem mindestens einen alkalischen Feststoff als auch die Entnahme des carbonatisierten Feststoffs mittels Schleusen.

Weiterhin ist offensichtlich und liegt im Rahmen der Erfindung, dass das Verfahren sowohl im Gleichstrom- als auch im Gegenstrom-Prinzip betrieben werden kann, d.h. dass der Reaktivgasstrom sowohl in Transportrichtung des alkalischen Feststoffs bzw. des carbonatisierten Feststoffs als auch in Gegenrichtung geführt werden kann, wobei letzteres die bevorzugte Durchführungsvariante ist.

Die Zuleitung und die Ableitung des $CO_2$-haltigen Gases erfolgt erfindungsgemäß über Rohr **3** und die Anschlußrohre **5a** und **5b,** wobei sichergestellt wird, dass einerseits die Drehbewegung der Reaktorkammer **1** nicht behindert wird, und es andererseits auch nicht zu unerwünschten Gasaustritten aus dem Reaktor **100** oder unerwünschten Gaseinströmungen in den Reaktor **100** kommt.

Als $CO_2$-haltige Gasatmosphäre bzw. Reaktivgas werden bevorzugt Abgase aus thermischen Verfahren, beispielsweise aus Verbrennungsprozessen oder Kalzinierungsprozessen (Blockheizkraftwerke, Müllverbrennungsanlagen, Zementproduktion, Stahlherstellung) verwendet. Ebenfalls bevorzugt sind Abgase aus Fermentationsprozessen wie der alkoholischen Gärung.

Im Falle der Verwendung des erfindungsgemäßen Verfahrens an einer Müllverbrennungsanlage wird die $CO_2$-haltige Gasatmosphäre, also das Reaktivgas, als Teilstrom des Reingases bereitgestellt und nach Austritt aus dem Reaktor wieder dem Hauptabgasstrom der Müllverbrennungsanlage zugeführt. Als "Reingas" wird in diesem Zusammenhang gemäß Bundes-Immissionsschutz-Gesetz (BImSchG) das behandelte Abgas der Müllverbrennungsanlage verstanden.

Es ist für den Fachmann naheliegend und gehört zum Wesen des erfinderischen Verfahrens, dass das Verfahren auch unter Verwendung anderer Aschearten durchgeführt werden kann, ohne den Umfang der Erfindung zu verlassen.

Die wesentlichen Einflußfaktoren für den Carbonatisierungsprozeß sind:

1.) der Volumenstrom des Reaktivgases ($\dot{v}$),
2.) die Verweilzeit des mindestens einen alkalischen Feststoffs in der Reaktorkammer **1** (tres) und
3.) die Massenbeladung der Reaktorkammer **1** mit dem mindestens einen alkalischen Feststoff ($M_{aFS}$).

Das Verfahren wird in weiten Temperatur-, Zeit- und Druckbereichen durchgeführt, um die vorstehend genannten Einflußfaktoren hinsichtlich des jeweiligen Feststofftyps sowie des verwendeten Reaktivgases zu optimieren, ohne dabei den Umfang der Erfindung zu verlassen. Bevorzugt wird das erfindungsgemäße Verfahren der Carbonatisierung von alkalischen Feststoffen bei einem Druck des Reaktivgases von 100 Hektopascal bis 50000 Hektopascal absolut, besonders bevorzugt bei 500 Hektopascal bis 10000 Hektopascal absolut und ganz besonders bevorzugt bei 800 Hektopascal bis 2000 Hektopascal absolut durchgeführt. Bevorzugt wird das erfindungsgemäße Verfahren der Carbonatisierung von alkalischen Feststoffen bei einer Temperatur von 0 °C bis 300 °C, besonders bevorzugt bei einer Temperatur von 10 °C bis 200 °C und ganz besonders bevorzugt bei einer Temperatur von 20 °C bis 100 °C durchgeführt. Generell sind möglichst niedrige Reaktivgastemperaturen gewünscht, da dann im Falle der Verwendung von Abgasen aus Energiegewinnungsanlagen, beispielsweise Müllverbrennungsanlagen, das Abgas zuvor energetisch optimal genutzt wurde; bei Verwendung kalter Abgase, z. B. aus Fermentationsprozessen ist es für die Energiebilanz des Verfahrens vorteilhaft, wenn das Reaktivgas nicht erhitzt werden muss. Ein eventueller Reaktivitätsverlust kann zumindest teilweise durch eine Erhöhung des Reaktivgasdruckes oder einer Verlängerung der Verweilzeit ausgeglichen werden. Für die Ökonomie des Verfahrens ist es jedoch vorteilhaft, wenn der Druck des Reaktivgases möglichst nahe bei dem herrschenden Umgebungsdruck liegt und die Verweilzeit möglichst kurz ist.

Bei der Durchführung des erfindungsgemäßen Verfahrens in einem Reaktor **100** mit drehbarer Reaktorkammer **1** ist auch die Drehgeschwindigkeit der Reaktorkammer **1** ein wesentlicher Parameter, der die Durchmischung der Asche und damit den Kontakt mit dem $CO_2$-haltigen Abgas sowie die Verweilzeit im Reaktor **100** sehr stark beeinflusst. Es ist dem Fachmann bekannt, dass die Drehgeschwindigkeit je nach aktueller Prozeßführung in weiten Grenzen variiert werden kann. Erfindungsgemäß sind daher Drehgeschwindigkeiten von etwa 10 Umdrehungen pro Minute bis zu 1 Umdrehung pro Stunde anwendbar.

Die Dauer des Verfahrens, d. h. die Verweilzeit des alkalischen Feststoffs in der Reaktorkammer **1,** variiert je nach Durchsatzmenge und -geschwindigkeit des alkalischen Feststoffs und des Reaktivgases sowie dem beabsichtigten Umsetzungsgrad in weiten Bereichen. Bevorzugt ist eine Verfahrensdauer von 0,5 Stunden bis 24 Stunden, besonders bevorzugt von 0,5 Stunden bis 8 Stunden und ganz besonders bevorzugt von 0,5 Stunden bis 2 Stunden.

Ein weiterer wesentlicher Parameter des erfindungsgemäßen Verfahrens ist der $CO_2$-Gehalt des verwendeten Reaktivgases. Es ist ein besonderer Vorteil des Verfahrens, dass unbehandelte oder behandelte Abgase aus verschiedensten industriellen Prozessen direkt als Reaktivgas verwendet werden können, insbesondere Abgase aus Verbrennungsprozessen, die üblicherweise $CO_2$-Konzentrationen von 5 bis 7 Prozent (v/v) aufweisen. Bevorzugt ist daher die Verwendung eines Reaktivgases mit einem $CO_2$-Gehalt von über 0,1 % (v/v), das heißt von 0,1 % (v/v) bis 100 % (v/v), besonders bevorzugt ist die Verwendung eines Reaktivgases mit einem $CO_2$-Gehalt von 1 % (v/v) bis 50 % (v/v), und ganz besonders bevorzugt ist die Verwendung eines Reaktivgases mit einem $CO_2$-Gehalt von 3 % (v/v) bis 10 % (v/v).

An den eigentlichen Carbonatisierungsprozeß wird im Bedarfsfalle erfindungsgemäß als weiterer Verfahrensschritt ein Waschschritt der behandelten alkalischen Feststoffe, insbesondere mit Wasser, angeschlossen. Dadurch wird ein stabileres Produkt (carbonatisierter Feststoff) erhalten, in dem Sinne, dass bei anschließender Verwendung als Baustoff oder bei Deponierung weniger Schwermetalle ausgelaugt werden können. Auch dieser Prozeßschritt kann kontinuierlich oder diskontinuierlich durchgeführt werden. Dadurch wird die Einhaltung entsprechender nationaler gesetzlicher Vorgaben für den jeweiligen beabsichtigten Verwendungszweck sichergestellt. Bei diesen Vorgaben handelt es sich um charakteristische Analysenparameter von Rostaschen und anderen alkalischen Feststoffen, wie sie beispielhaft für Deutschland in der Deponieverordnung und der Ersatzbaustoffverordnung dokumentiert sind (vgl. Fig. 4). Die Bestimmung dieser Parameter erfolgt gemäß einschlägig bekannter Normen wie der DIN-DEV S4, DIN EN 12457-4, DIN 38414-4, DIN 19528 und der DIN 19529. Dem Fachmann sind sowohl die korrekte Anwendung dieser Normen und Verordnungen bekannt, als auch deren nationale Entsprechungen in anderen Ländern, sowie deren jeweilige korrekte Anwendung.

Die Probennahme für die Bestimmung dieser charakteristischen Analysenparameter (Eluatwerte) wird manuell oder automatisch über das Schleusensystem **9** am Anschlußrohr **5a** durchgeführt; auch die Bestimmung der Eluatwerte selbst sowie deren Berücksichtigung bei der Steuerung/Regelung kann sowohl manuell als auch automatisiert erfolgen.

Die erfindungsgemäße Vorrichtung wird nachfolgend bezugnehmend auf die Zeichnungen Fig. 7, Fig. 8, Fig. 9 und Fig. 10 näher beschrieben. Der Übersichtlichkeit halber sind nicht alle kennzeichnenden Merkmale der erfindungsgemäßen Vorrichtung in allen Zeichnungen wiedergegeben. Die Gasführung wird in allen Zeichnungen jeweils durch durchgezogene Pfeile dargestellt, der Transport des carbonatisierten Feststoffs wird in Fig. 10 durch unterbrochene Pfeile dargestellt. Alle Zeichnungen sind nicht maßstäblich ausgeführt. Der mindestens eine in der Vorrichtung befindliche zu carbonisierende alkalische Feststoff ist der Übersichtlichkeit halber in den Zeichnungen 7, 8, 9 und 10 nicht dargestellt.

Fig. 7 zeigt schematisch eine bevorzugte Ausführungsform der erfindungsgemäßen Vorrichtung in Übersicht. Der Reaktor **100,** bevorzugt ein Drehrohrreaktor, umfasst eine durch zwei Endplatten **2a, 2b** im wesentlichen gasdicht abgeschlossene röhrenförmigen Reaktorkammer **1,** die um ihre zentrale Längsachse, angedeutet durch die unterbrochene Linie X-X', rotieren kann. Mindestens eine der beiden Endplatten **2a, 2b** ist demontierbar an der röhrenförmigen Reaktorkammer **1** befestigt, so dass die Reaktorkammer **1** zur Befüllung und Entleerung oder zur Wartung geöffnet werden kann. Alternativ kann die Reaktorkammer **1** auch seitlich eine separate wiederverschließbare Öffnung **1a** aufweisen. Die Reaktorkammer 1 umschließt den Reaktionsraum **8** und trennt ihn von der Umgebungsluft ab.

Entlang der Längsachse der Reaktorkammer **1** ist ein Rohr **3** kraftschlüssig und gasdicht mit den Endplatten **2a, 2b** verbunden, wobei die Verbindung mit mindestens einer der beiden Endplatten **2a, 2b** lösbar ist. Das Rohr **3** weist einen Ableitungsbereich **3a** zur Ableitung von Reaktivgas und/oder alkalischem Feststoff aus der Reaktorkammer **1** auf, sowie einen Einleitungsbereich **3b** zur Einleitung von Reaktivgas und/oder alkalischem Feststoff in die Reaktorkammer **1.** Weiterhin weist Rohr **3** mindestens eine Trennwand **6** auf, die den Ableitungsbereich **3a** des Rohres **3** vom Einleitungsbereich **3b** gasdicht abtrennt, sowie mindestens eine Ausströmöffnung **7b** im Einleitungsbereich **3b** des Rohres **3** zur Überführung von Reaktivgas und/oder alkalischem Feststoff aus dem Einleitungsbereich **3b** des Rohres **3** in die Reaktorkammer **1** und mindestens eine Einströmöffnung **7a** im Ableitungsbereich **3a** des Rohres **3** zur Überführung von Reaktivgas und/oder alkalischem Feststoff aus der Reaktorkammer **1** in den Ableitungsbereich **3a** des Rohres **3.** Rohr **3** ist an den Enden mittels Drehkupplungen **4a, 4b** drehbar und zumindest teilweise gasdicht an nicht drehbaren Anschlussrohren **5a, 5b** befestigt, wobei die Drehkupplungen gleichzeitig als Lager für die Reaktorkammer **1** und das Rohr **3** dienen. Es ist jedoch ebenfalls erfindungsgemäß, für die Lagerung von Rohr **3** und/oder Reaktorkammer **1** separate Lager **16** vorzusehen, um die mechanischen Belastungen der Drehkupplungen **4a, 4b** sowie der Anschlussrohre **5a, 5b** möglichst gering zu halten. Die Lagerung der Reaktorkammer **1** unter Verwendung der Drehkupplungen **4a, 4b** oder den Lagern **16** ist so ausgeführt, dass die Reaktorkammer **1** zusätzlich zur Drehbewegung um die Achse X-X' auch um eine horizontal und rechtwinklig zur Achse X-X' gelegene Neigungsachse geneigt werden kann. Die Reaktorkammer **1** ist also erfindungsgemäß in Längsrichtung neigbar ausgeführt, so dass die Transportgeschwindigkeit der Feststoffe durch die Reaktorkammer **1** und das Rohr **3** durch Variation des Neigungswinkels und der Drehgeschwindigkeit variiert werden kann. Dies ist der Übersichtlichkeit halber in den Zeichnungen nicht dargestellt. Da Rohr **3** und Reaktorkammer **1** kraftschlüssig miteinander verbunden sind, muss das Antriebsmittel **17,** mit Hilfe dessen die Reaktorkammer **1** in Rotation versetzt werden kann, nicht zwingend direkt an der Reaktorkammer **1** angreifen; vielmehr kann das Antriebsmittel **17** auch so angeordnet sein, dass die Drehbewegung vom Antriebsmittel **17** auf das Rohr **3** übertragen wird und durch das Rohr **3** auf die Reaktorkammer **1.** Beide Varianten der Anordnung von Antriebsmittel **17** sind erfindungsgemäß. Dem Fachmann sind Drehkupplungen **4a, 4b,** Lager **16,** sowie Antriebsmittel **17** bekannt, die erfindungsgemäß verwendet werden können.

Aus dem zuvor gesagten geht hervor, dass es für die Stabilität der Vorrichtung besonders vorteilhaft ist, wenn Rohr **3** ein durchgehendes Rohr ist, d.h. es verläuft durch die gesamte Reaktorkammer und darüber hinaus, da es dann zur mechanischen Stabilität und Lagerung der gesamten Vorrichtung beiträgt. Es ist jedoch ebenfalls erfindungsgemäß, wenn anstelle eines durchgehenden Rohres **3** zwei Rohre verwendet werden, deren eines analog zu Rohr **3** an der Endplatte **2a** befestigt ist, aber nicht oder nicht wesentlich in die Reaktorkammer **1** hineinragt, und das die Funktion des Ableitungsbereichs **3a** übernimmt, und deren anderes analog zu Rohr **3** an der Endplatte **2b** befestigt ist, aber nicht oder nicht wesentlich in die Reaktorkammer **1** hineinragt, und das die Funktion des Einleitungsbereichs **3b** übernimmt. Die beiden alternativ verwendbaren Rohre können im Inneren der Reaktorkammer über Verstrebungen miteinander verbunden sein, um eine ausreichende Stabilität der Vorrichtung zu gewährleisten.

Die erfindungsgemäß so an den Enden des zentralen Rohres **3** befestigten Drehkupplungen **4a, 4b,** dass sie die Durchleitung des Reaktivgases und/oder des alkalischen Feststoffs von dem nicht rotierenden Anschlußrohr **5b** durch die rotierende Reaktorkammer **1** zu dem ebenfalls nicht rotierenden Anschlußrohr **5a** ermöglichen, sind in den Zeichnungen nur schematisch dargestellt, da deren Ausführung an sich ebenfalls im Stand der Technik bekannt ist. Erfindungswesentlich ist die Verwendung der Drehkupplungen **4a, 4b** an Rohr **3** des Reaktors **100,** da es durch sie möglich ist, sowohl das Reaktivgas als auch den mindestens einen alkalischen Feststoff während der Drehung der Reaktorkammer **1** kontinuierlich durch die Reaktorkammer **1** hindurchzuleiten. Ein weiteres erfindungswesentliches Merkmal ist die im wesentlichen gasdichte mindestens eine Trennwand **6** in Rohr **3,** die dazu führt, dass das Reaktivgas zumindestens überwiegend aus der mindestens einen Öffnung **7b** aus dem Einleitungsbereich **3b** von Rohr **3** austritt, durch den Reaktionsraum **8** strömt, und durch die mindestens eine Öffnung **7a** in den Ableitungsbereich **3a** von Rohr **3** wieder eintritt. Neben der Lenkung des Reaktivgasstromes wird so durch Trennwand **6** bei vollständig kontinuierlicher Durchführung des Verfahrens auch der Transportweg des mindestens einen alkalischen Feststoffs durch den Reaktorraum **1** festgelegt. Weiterhin zeigt Fig. 7 eine Zeitmesseinrichtung **19,** die mit der Steuereinheit **15** verbunden ist, so dass die Verfahrensdauer bei der Steuerung oder Regelung des Verfahrens mit berücksichtigt wird.

Fig. 8 zeigt einen zentralen Schnitt durch den Reaktor **100** entlang der Längsachse X-X'. Das erfindungsgemäß optional in der Reaktorkammer **1** befindliche mindestens eine Mischwerkzeug **18** ist in Fig. 8 schematisch dargestellt. Das mindestens eine Mischwerkzeug **18** ermöglicht erstens eine gründliche Durchmischung des mindestens einen alkalischen Feststoffs, und damit einen intensiven Kontakt des alkalischen Feststoffs mit dem Reaktivgas. Zweitens ermöglicht das mindestens eine Mischwerkzeug den Transport des mindestens einen alkalischen Feststoffs durch die Reaktorkammer **1.** Die Anordnung des mindestens einen Mischwerkzeugs **18** kann sowohl an der Innenwand der Reaktorkammer **1** als auch an Rohr **3** erfolgen, und zwar in den Bereichen von Rohr **3,** die im Inneren der Reaktorkammer **1** liegen. Dem Fachmann sind zahlreiche unterschiedliche Ausführungsformen sowie Montagemöglichkeiten derartiger Mischwerkzeuge **18** bekannt, die für das erfindungsgemäße Verfahren verwendet werden können, ohne den Umfang der Erfindung zu verlassen.

Fig. 9 zeigt beispielhaft ein Schleusensystem **9** für die Zuführung des alkalischen Feststoffs in die Vorrichtung, das am Anschlußrohr **5b** montiert ist. Es kann gleichermaßen für den Austrag des carbonisierten Feststoffs verwendet werden, wenn es am Anschlußrohr **5a** montiert ist. Für die kontinuierliche Beschickung mit mindestens einem alkalischen Feststoff sowie den ebenfalls kontinuierlichen Austrag des mindestens einen carbonatisierten Feststoffs weist die Vorrichtung zwei Schleusensysteme **9** auf, wobei das eine an Anschlußrohr **5a** befestigt ist, und das andere an Anschlußrohr **5b.** Die beiden Schleusensysteme **9** werden jeweils mit Hilfe der Spülgas-Zuleitung **10a,** der Spülgas-Ableitung **10b** und den Ventilen **11a** und **11b** mit Spülgas gespült, so dass während der Durchführung des Prozesses nur geringe Mengen Reaktivgas verloren gehen. Als Spülgas wird vorteilhaft Umgebungsluft verwendet. Vorteilhafterweise ist die Drehachse X-X' der Reaktorkammer **1** bei der Durchführung des Prozesses gegen die Horizontale geneigt und das Schleusensystem **9** für den Eintrag des mindestens einen alkalischen Feststoffs beispielsweise an der Oberseite des Anschlußrohres **5b** moniert und das Schleusensystem für den Austrag der carbonatisierten Feststoffs an der Unterseite des Anschlußrohres **5a,** wobei die Neigung von Rohr **3** und damit auch Reaktorkammer **1** derart ist, dass sich die Drehkupplung **4b** räumlich oberhalb der Drehkupplung **4a** befindet, so dass der mindestens eine eingeschleuste alkalische Feststoff aufgrund der Schwerkraft ohne weitere Hilfe im Anschlußrohr **5b** bis in die Drehkupplung **4b** rutscht, von wo aus er durch die Drehbewegung von Rohr **3** und Reaktorkammer **1** weiterbefördert wird, bis er durch die Drehkupplung **4a** in das Anschlußrohr **5a** rutscht, aus dem er wiederum allein durch die Schwerkraft in das zweite Schleusensystem **9** für den Austrag des carbonatisierten Feststoffs fällt. Neben der hier skizzierten Schleusenanordnung sind dem Fachmann weitere Arten von Schleusensystemen bekannt, insbesondere Zellradschleusen, die im Rahmen der Erfindung verwendet werden können, ohne den Umfang der Erfindung zu verlassen.

Weiterhin sind in Fig. 9 schematisch beispielhaft in symbolischer Form die Datenaufnahmesysteme für Rotationsgeschwindigkeit **12,** Reaktivgasdruck **13** und Temperatur **14** skizziert. Dem Fachmann sind zahlreiche im Stand der Technik verfügbare Systeme bekannt, die diese oder gar mehrere dieser Parameter gleichzeitig erfassen können. Es ist daher ebenfalls erfindungsgemäß, derartige Kombinationsgeräte, die mehrere Parameter erfassen können, anstelle der einzelnen Datenaufnahmesysteme **12, 13** und **14** zu verwenden. Dem Fachmann ist bekannt, dass die Montage der Datenaufnahmesysteme **12, 13** und **14** auch an anderen geeigneten Orten an der Vorrichtung erfolgen kann, ohne den Umfang der Erfindung zu verlassen. Auch die Datenübertragung zur Steuereinheit **15,** bei der es sich erfindungsgemäß um einen Computer oder ein anderes mikroprozessorbasiertes Gerät handelt, kann im Rahmen der Erfindung sowohl per Funkübertragung als auch via Kabel und Schleifkontakten erfolgen. Dem Fachmann sind derartige kommerziell erhältliche Systeme bekannt, die erfindungsgemäß eingesetzt werden können.

Fig. 10 zeigt in schematischer Form beispielhaft den optionalen Teil der Vorrichtung, in dem der Waschschritt durchgeführt wird. Der carbonatisierte Feststoff gelangt aus dem an Anschlußrohr **5a** befindlichen Schleusensystem **9** auf das Förderband **20** und wird durch das Förderband **20** unter einer Berieselungsanlage **21** hinweggeführt, aus der der carbonatisierte Feststoff mit Wasser berieselt wird, wodurch der Waschschritt erfolgt. Sowohl Förderband **20** als auch Berieselungsanlage **21** sind optional mit der Steuereinheit **15** durch Kabel oder Funkverbindungen verbunden, so dass ihr Betrieb in Abhängigkeit der Verfahrensparameter und somit der Durchsatzmenge an carbonatisiertem Feststoff gesteuert oder geregelt werden kann; diese Verbindungen zur Steuereinheit **15** sind in Fig. 10 der Übersichtlichkeit halber nicht dargestellt. Dem Fachmann sind weitere Vorrichtungen für den Transport des carbonatisierten Feststoffs und die Durchführung des Waschschrittes bekannt, die ebenfalls verwendet werden können, ohne den Umfang der Erfindung zu verlassen.

Das erfindungsgemäße Verfahren und die erfindungsgemäße Vorrichtung werden nachfolgend anhand von Ausführungsbeispielen näher erläutert, wobei die Erfindung alle nachfolgend aufgeführten bevorzugten Ausführungsformen einzeln und in Kombination umfasst. Die offenbarten Ausführungsbeispiele dienen in keiner Weise dazu, den Umfang der Erfindung zu beschränken. Dem Fachmann sind weitere hier nicht offenbarte Ausführungsvarianten naheliegend ersichtlich, die ebenfalls in den Schutzbereich der Erfindung fallen.

## Kurze Beschreibung der Zeichnungen

Die Zeichnungen zeigen im Einzelnen:

- Fig. 1: Tabelle 1 (Versuchsplan zur Carbonatisierung der Rostaschen; Faktorstufenkombination der unabhängigen Variablen Volumenstrom, Verweilzeit und Beladung).
- Fig. 2A: Ausgewählte Komponenten (pH-Wert, elektrische Leitfähigkeit) im S4-Eluat der gemäß Versuchsplan carbonatisierten Rostasche. Große Symbole kennzeichnen die Ergebnisse der unbehandelten Kontrolle.
- Fig. 2B: Ausgewählte Komponenten (Pb, Cr) im S4-Eluat der gemäß Versuchsplan carbonatisierten Rostasche. Große Symbole kennzeichnen die Ergebnisse der unbehandelten Kontrolle.
- Fig. 3: Funktionaler Zusammenhang zwischen der elektrischen Leitfähigkeit und der Pb-Konzentration im Eluat der carbonatisierten Rostasche.
- Fig. 4A: Tabelle 2 (Meßwerte der S4-Eluate der Versuche 1 bis 28.
- Fig. 4B: Tabelle 3 (S4- und Säuleneluate der unbehandelten Kontrollprobe (Original) und des Versuchs Nr. 28 im Vergleich zu den geltenden Zuordnungs- bzw. Materialwerten gemäß DepV und ErsatzbaustoffV; "LF" = elektrische Leitfähigkeit).
- Fig. 5: Rasterelektronenmikroskopische Aufnahmen der Kornmorphologie unbehandelter (links) und konditionierter Rostasche (rechts) bei 2.000facher (oben) und 10.000facher Vergrößerung (unten).
- Fig. 6: Thermogravimetrische Kennlinien von unbehandelter durchgezogene Linie) bzw. carbonatisierter Rostasche (unterbrochene Linie) aus Versuch Nr. 28.
- Fig. 7: Schematische Darstellung einer Ausführungsform der erfindungsgemäßen Vorrichtung.
- Fig. 8: Schematische Darstellung der Ausführungsform aus Fig. 7 im Querschnitt entlang der Längsachse.
- Fig. 9: Schematische Darstellung eines Schleusensystems für den Eintrag der Rostasche und den Austrag der carbonatisierten Rostasche im Querschnitt entlang der Längsachse.
- Fig. 10: Förderband **20** und Berieselungsanalage **21** für die Durchführung des optionalen Waschschrittes.

## Bezugszeichenliste

| | |
|---|---|
| **1** | - Reaktorkammer |
| **1a** | - wiederverschließbare Öffnung in der Reaktorkammer **1** |
| **2a, 2b** | - Endplatten |
| **3** | - Rohr |
| **3a** | - Ableitungsbereich von Rohr **3** |
| **3b** | - Einleitungsbereich von Rohr **3** |

| | |
|---|---|
| **4a** | - Drehkupplung am Ableitungsbereich **3a** von Rohr **3** |
| **4b** | - Drehkupplung am Einleitungsbereich **3b** von Rohr **3** |
| **5a** | - Anschlußrohr für den Ableitungsbereich **3a** von Rohr **3** |
| **5b** | - Anschlußrohr für den Einleitungsbereich **3b** von Rohr **3** |
| **6** | - Trennwand in Rohr **3** |
| **7a** | - Einströmöffnung |
| **7b** | - Ausströmöffnung |
| **8** | - Reaktionsraum |
| **9** | - Schleusensystem |
| **10a** | - Spülgas-Zuleitung |
| **10b** | - Spülgas-Ableitung |
| **11a, 11b** | - Ventile |
| **12** | - Datenaufnahmesystem zur Messung der Rotationsgeschwindigkeit |
| **13** | - Datenaufnahmesystem zur Messung des Reaktivgasdrucks |
| **14** | - Datenaufnahmesystem zur Messung der Temperatur |
| **15** | - Steuereinheit |
| **16** | - Lager |
| **17** | - Antriebsmittel |
| **18** | - Mischwerkzeug |
| **19** | - Zeitmesseinrichtung |
| **20** | - Förderband |
| **21** | - Berieselungsanlage |
| **100** | - Reaktor |

**Ausführungsbeispiele**

Der für die Durchführung der nachfolgend beschriebenen Ausführungsbeispiele des Verfahrens im Labormaßstab an Hand von Rostaschen verwendete erfindungsgemäße Reaktor **100** umfasst eine auf Rollen gelagerte Reaktorkammer **1,** wobei die Enden der Reaktorkammer **1** mit Hilfe von im wesentlichen gasdichten Endplatten **2a, 2b** lösbar verschlossen sind. Es ist für den Fachmann naheliegend, dass die großtechnische Durchführung im Industriemaßstab unter Verwendung geeigneter größenadaptierter Mittel und Geräte bzw. Maschinen ebenfalls in den Umfang der Erfindung fällt. Dem Fachmann sind darüber hinaus weitere geeignete Reaktoren bekannt, die verwendet werden können, ohne den Umfang der Erfindung zu verlassen.

Um ein horizontales Wandern der rotierenden Reaktorkammer **1** zu vermeiden, wurden auf den Mantel der Reaktorkammer **1** zwei Führungsringe aufgeschweißt, die den seitlichen Spielraum auf ca. 4 cm begrenzen. Zur Durchmischung der Rostasche diente ein entlang der Längsachse zentral fixiertes Mischwerkzeug **18** mit 20 Mischelementen.

Art, Anzahl und Positionierung des mindestens einen Mischwerkzeuges **18** werden je nach Art des zu behandelnden alkalischen Feststoffs, Form und Größe der Reaktorkammer **1** sowie Drehgeschwindigkeit von Reaktorkammer **1** oder Mischwerkzeug **18** unterschiedlich gewählt, ohne den Umfang der Erfindung zu verlassen.

Die Zufuhr des Reaktivgases erfolgte über gasdichte Drehkupplungen **4a, 4b** im Zentrum der Endplatten **2a, 2b.** Die Laborversuche wurden mittels synthetischem Abgas durchgeführt. Das synthetische Abgas wurde mit Hilfe einer Gasmischstation, Typ Gmix, Version USB 1.2 der Fa. HiTech Zang GmbH aus Herzogenrath, als Mischung von synthetischer Luft und Kohlenstoffdioxid 3.0 (Endkonzentration 6,6 Vol. % $CO_2$) erzeugt und über einen Polyamidschlauch dem Reaktor **100** zugeleitet. Dem Fachmann sind weitere geeignete Gasmischapparaturen bekannt, die verwendet werden können, ohne den Umfang der Erfindung zu verlassen. Analog zur Mischung des synthetischen Abgases im Rahmen der hier offenbarten Ausführungsbeispiele fällt es ebenfalls in den Umfang der Erfindung, ein reales Abgas durch Beimischung von anderen Gasen bzw. Gasmischungen, insbesondere Umgebungsluft, auf einen definierten Kohlendioxidgehalt einzustellen.

Die Probenahme der Rostasche für die Carbonatisierungsexperimente erfolgte unter trockenen Witterungsbedingungen, einer Lufttemperatur von ca. 10 °C und leichtem Wind. Die Probenahme der Rostasche erfolgte unter Verwendung eines Radladers, mit dessen Hilfe dem Haufwerk aus maximal 48 Stunden alten Rostaschen zwei Einzelproben entnommen wurden. Daraus wurde die Laborprobe auf einer Gewebeplane durch mehrfaches Umschichten und Aufhäufen der Rostasche hergestellt. Große Metallteile, Glasscherben und Steine wurden aussortiert. Das Probenvolumen (ca. 300 L) wurde auf fünf 60 Liter-Spannringfässer verteilt und bis zur Verwendung verschlossen bei Raumtemperatur gelagert.

In Tabelle 1 (Fig. 1) sind die Parameter der einzelnen Versuche zusammengestellt; die Durchführung der einzelnen Versuche erfolgte wie nachstehend beschrieben:

Die abgewogene Menge Rostasche wurde mittels eines entlang der Längsachse halbierten PE Rohres in die geöffnete Reaktorkammer **1** eingefüllt, das Mischwerkzeug eingesetzt, und die Reaktorkammer **1** verschlossen. Vor jedem Durchlauf wurde über die computergesteuerte Gasmischanlage Gmix der individuelle Abgasvolumenstrom eingestellt. Um eine Überlastung des Reaktors **100** zu verhindern, wurden die Eingangs- und Ausgangsdrücke der Gasmischanlage über das Steuerungsprogramm der Gasmischstation festgelegt. Der Ausgangsdruck der Gasmischstation wurde auf Minimal- und Maximaldrücke von 1,1 bar bzw. 1,3 bar eingestellt. Der Eingangsdruck lag jeweils zwischen 3,0 und 3,5 bar. Die Rotation der Reaktorkammer betrug 4-5 Umdrehungen pro Minute.

Nach Abschluss eines Durchgangs wurden die Gaszufuhr und der Antrieb der Reaktorkammer **1** gestoppt. Aus dem carbonatisierten Feststoff wurden umgehend Proben zur Anfertigung der S4-Eluate nach DIN-DEV S4 entnommen. Neben den Feststoffproben für die Anfertigung der S4-Eluate wurde dabei jeweils auch ein Aliquot für die Durchführung des Säulenversuchs nach DIN 19528 entnommen. Abweichend von der Norm wurde hierbei auf die Basisschüttung aus Quarzsand verzichtet; als Auflager diente ein Kunststoff-Geotextil - Terram 1000 - der Fa. Huesker.

Die hydrochemischen Leitparameter der Eluate (pH-Wert, Redoxpotenzial - angegeben als Spannung gegen Standard-Wasserstoffelektrode -, elektrische Leitfähigkeit) sowie die Konzentration der Anionen wurden nach standardisierten Verfahren (Potentiometrie, Konduktometrie, Ionenchromatographie) bestimmt. Die Untersuchung auf Metalle und Metalloide erfolgte mittels ICP-MS. Zur Untersuchung der Kornmorphologie wurden Proben der unbehandelten Originalsubstanz und einer konditionierten Probe rasterelektronenmikroskopisch unter Verwendung eines Geräts vom Typ EVO LS 10 der Fa. Zeiss untersucht. Mittels Thermogravimetrie (TGA) unter Verwendung eines Geräts vom Typ TG 209 F1 Iris der Fa.

Netzsch wurde die $CO_2$-Aufnahme der carbonatisieren Probe im Vergleich zur unbehandelten Originalsubstanz untersucht. Für die TGA-Analyse wurden jeweils etwa 30 mg Probe in einen Tiegel eingewogen, auf einer Mikrowaage platziert und mit einer Heizrate von 10 K/min auf eine Temperatur von 900 °C erhitzt. Der Massenschwund im Temperaturfenster von 500 bis 600 °C ist proportional zur Wiederfreisetzung von $CO_2$ aus den bei der Carbonatisierung gebildeten Mineralphasen. Dem Fachmann sind zahlreiche weitere marktgängige Analysengeräte für die Elektronenmikroskopie und die Thermogravimetrie bekannt.

Fig. 2A und Fig. 2B zeigen ausgewählte Ergebnisse der S4-Elutionen des carbonatisierten Materials, zusammen mit den entsprechenden Resultaten für die unbehandelte Kontrolle. Ähnliche Immobilisierungseffizienzen wie für Blei wurden für die ebenfalls amphoteren Schwermetalle Kupfer und Zink festgestellt. Im Unterschied zu Blei weist Chrom eine geringfügige Mobilisierungstendenz mit zunehmendem $CO_2$-Angebot auf. Qualitativ ähnliche Effekte werden für die Elemente Molybdän und Vanadium beobachtet, die wie Chrom zur Bildung von Oxoanionen neigen. Ein bedeutendes Speichermineral für Oxoanionen ist Ettringit, der diese anstelle von Sulfat in das Kristallgitter aufnimmt. Die Stabilität des Ettringits ist mit abnehmendem pH-Wert rückläufig, sodass infolge von dessen Zerfall Chromat, Molybdat und Vanadat verstärkt in Lösung gehen. Die Mobilisierung von Oxoanionen ist somit ein unerwünschter Nebeneffekt, der jedoch aufgrund der niedrigen Konzentrationsbereiche weder die kostengünstigere Deponierung noch die ersatzbaustoffliche Verwertung des carbonatisierten Materials einschränkt.

Mit Blick auf eine großtechnische Umsetzung der beschleunigten Carbonatisierung wurde geprüft, inwieweit vergleichsweise einfach zu bestimmende hydrochemische Parameter als Indikatoren für den Erfolg der Behandlung geeignet sind. Figur 3 zeigt den funktionalen Zusammenhang zwischen der elektrischen Leitfähigkeit und der Bleikonzentration im Eluat der carbonatisierten Rostasche. Es wurde die in Gleichung 1 gezeigte Funktion ermittelt, mit der sich das Verfahren einfach anhand der Messung der Bleikonzentration steuern bzw. regeln lässt.

$$c = a \cdot e^{(b \cdot LF - c)} \qquad \text{(Gleichung 1)}$$

In Gleichung 1 bedeutet "c" im vorliegenden Fall die Bleikonzentration im Eluat in mg/L und "LF" die elektrische Leitfähigkeit des Eluats in mS/L; "e" ist die Basis des natürlichen Logarithmus (Eulersche Zahl, 2,718...). Bei den Variablen a, b und c handelt es sich um empirisch ermittelte numerische Parameter, die mit Hilfe von Vergleichsversuchen ermittelt werden, indem die Werte der elektrischen Leitfähigkeit unterschiedlich konzentrierter Eluate gegen die Schwermetallkonzentration der Eluate graphisch aufgetragen werden, und eine Ausgleichskurve ermittelt wird. Verfahren zur Ermittlung von Ausgleichskurven sind dem Fachmann bekannt. Mit dieser empirischen Funktion ist es möglich, anhand der einfach zu bestimmenden elektrischen Leitfähigkeit des Eluats eines alkalischen Feststoffs, bzw. eines carbonisierten Feststoffs, insbesondere von Rostasche, die für eine baustoffliche Verwendung oder Deponierung hauptsächlich relevante Schwermetallkonzentration im Eluat, insbesondere die Bleikonzentration, zu bestimmen, sofern das Elutionsverhalten des alkalischen Feststoffs, bzw. des carbonisierten Feststoffs bekannt ist. Die Funktion eignet sich daher dazu, bei einer großtechnischen Umsetzung des Verfahrens den Carbonatisierungserfolg insbesondere bezüglich des kritischen Parameters Blei (Pb) anhand von einfacher und vor Ort verfügbarer Messtechnik zu bestimmen, und das Verfahren somit durch Vergleich des aktuell bestimmten Wertes der elektrischen Leitfähigkeit, bzw. der ermittelten Schwermetallkonzentration, mit einem entsprechenden Referenzwert zu steuern bzw. zu regeln. Es ist dem Fachmann bekannt, dass die numerischen Parameter a, b und c in Abhängigkeit von der chemischen Zusammensetzung der Rostaschen und des zu überwachenden Schwermetalls variiert werden können, ohne den Umfang der Erfindung zu verlassen. Bevorzugt werden die Parameter in den folgenden Grenzen gewählt: a = 0,9(±0,4), b = 1,2(±0,6), c = 7,2(±2,0), besonders bevorzugt in den Grenzen: a = 0,9(±0,2), b = 1,2(±0,3), c = 7,2(±1,0) und ganz besonders bevorzugt in den Grenzen: a = 0,9(±0,1), b = 1,2(±0,1), c = 7,2(±0,5). Es ist für den Fachmann weiterhin naheliegend, dass Gleichung 1 bei geeigneter Parametrisierung auch für die Bestimmung der Eluatkonzentrationen anderer Schwermetalle verwendet werden kann. Die Erfindung umfasst daher auch die Verwendung von Gleichung 1 in geeigneter Parametrisierung für die Bestimmung der Schwermetallkonzentrationen der Schwermetalle, ausgewählt aus der Liste umfassend Blei, Kupfer, Zink, Arsen, Cadmium, Nickel, Barium, Chrom, Molybdän, Antimon, Selen und Vanadium.

Anhand beispielhafter Anfertigung von rasterelektronenmikroskopischen Aufnahmen behandelter Rostaschen sowie einer unbehandelten Vergleichsprobe wurde nachgewiesen, dass die Oberfläche der unbehandelten Rostasche eine poröse Struktur besitzt, die Oberfläche der konditionierten Probe aber durch die erfindungsgemäße Behandlung versiegelt ist. Ohne an eine Theorie gebunden zu sein, kann die Ursache dieser Oberflächenversiegelung in der Bildung von Carbonatniederschlägen auf der Oberfläche gesehen werden, die einerseits Speicherminerale geringerer Löslichkeit darstellen und andererseits durch die Minderung freier Oberflächen den Stoffaustausch bei der Elution erschweren.

Die Menge des aufgenommenen $CO_2$ wurde mittels Thermogravimetrie untersucht. In Fig. 6 ist das Ergebnis der vergleichenden Untersuchung einer carbonatisierten Probe aus Versuch Nr. 28 und einer unbehandelten Vergleichsprobe dargestellt. Man erkennt deutlich die verstärkte Gewichtsabnahme der carbonatisierten Probe gegenüber der unbehandelten Vergleichsprobe ab ca. 500 °C, was auf die Zersetzung der gebildeten Carbonate zurückzuführen ist.

Die offenbarten Ausführungsbeispiele zeigen, dass es möglich ist, innerhalb von weniger als 100 Minuten eine $CO_2$-Aufnahme der Rostasche von 3 Massen-% zu erzielen, und die Mobilität amphoterer Schwermetalle um bis zu 99,5 % zu reduzieren.

## Patentansprüche

**1.** Verfahren für die Carbonatisierung mindestens eines alkalischen Feststoffs, **dadurch gekennzeichnet dass** es in einem Reaktor **(100)** durchgeführt wird, der eine drehbar gelagerte Reaktorkammer **(1)** aufweist, und die folgenden Schritte umfasst,

a) das Zuführen von $CO_2$-haltigem Reaktivgas und mindestens einem alkalischen Feststoff in den Reaktor **(100)** unter Ausschluss
der Umgebungsluft, so dass die Carbonatisierung erfolgt, und
b) die Abführung des verwendeten Reaktivgases
und des carbonatisierten Feststoffs aus dem Reaktor **(100),** wobei

- der Feststoff durch Drehung der drehbar gelagerten Reaktorkammer (1) ständig bewegt und durchmischt wird, und die Drehgeschwindigkeit der Reaktorkammer zwischen 10 Umdrehungen pro Minute und 1 Umdrehung pro Stunde beträgt;
- die Zuleitung und die Ableitung des $CO_2$-haltigen Gases über Rohr **(3)** und die Anschlußrohre **(5a, 5b)** erfolgt;
- die Steuerung oder Regelung des Verfahrens über eine Steuereinheit **(15)** erfolgt.

**2.** Verfahren nach Anspruch 1, **dadurch gekennzeichnet, dass** nach Schritt b) ein weiterer Prozessschritt angeschlossen wird, umfassend c) mindestens einen Waschschritt der carbonatisierten Feststoffe mit Wasser.

**3.** Verfahren nach einem der vorhergehenden Ansprüche, **dadurch gekennzeichnet, dass** nach Schritt b) und/oder Schritt c) mindestens ein weiterer Verfahrensschritt durchgeführt wird, umfassend

i) entnehmen von mindestens einer Probe des mindestens einen carbonatisierten Feststoffs,
ii) anfertigen eines Eluates von der Probe aus Schritt i),
iii) bestimmen einer Schwermetallkonzentration in dem Eluat aus Schritt ii) und
iv) vergleichen der Schwermetallkonzentration aus Schritt iii) mit einem Referenzwert, wobei das Ergebnis dieses Vergleichs verwendet wird, um das Verfahren zu steuern oder zu regeln.

**4.** Verfahren nach Anspruch 3, **dadurch gekennzeichnet, dass** bei der Bestimmung der Schwermetallkonzentration gemäß Schritt iii) ein Verfahren verwendet wird, umfassend

a) die Bestimmung der elektrischen Leitfähigkeit des Eluates aus Schritt ii) und
β) die Umrechnung der elektrischen Leitfähigkeit aus Schritt a) in die Schwermetallkonzentration unter Verwendung der Gleichung 1,

$$c = a \cdot e^{(b \cdot LF - c)} \qquad (1),$$

wobei

e die Basis des natürlichen Logarithmus (Eulersche Zahl, 2,718...) ist,
LF die elektrische Leitfähigkeit ist,
c die Schwermetallkonzentration ist, und
a, b und c experimentell ermittelte Parameter der Gleichung 1 sind, die mit Hilfe von Vergleichsversuchen ermittelt werden, indem die Werte der elektrischen Leitfähigkeit unterschiedlich konzentrierter Eluate gegen die Schwermetallkonzentration der Eluate graphisch aufgetragen werden, und eine Ausgleichskurve ermittelt wird.

**5.** Verfahren nach Anspruch 4, **dadurch gekennzeichnet, dass** die experimentell ermittelten Parameter a, b und c der Gleichung 1 Werte innerhalb der folgenden Bereiche haben:

$0,5 \leq a \leq 1,3$ ;
$0,6 \leq b \leq 1,8$ ;
$5,2 \leq c \leq 9,2$ .

**6.** Verfahren nach einem der Ansprüche 3 bis 5, **dadurch gekennzeichnet, dass** es sich bei der mindestens einen bestimmten Schwermetallkonzentration um die Konzentration eines Schwermetalls handelt, ausgewählt aus der Liste umfassend Blei, Kupfer, Zink, Arsen, Cadmium, Nickel, Barium, Chrom, Molybdän, Antimon, Selen und Vanadium.

**7.** Verfahren nach einem der vorhergehenden Ansprüche, **dadurch gekennzeichnet, dass** es sich bei dem mindestens einen alkalischen Feststoff um Rostasche oder Flugasche handelt.

**8.** Verfahren nach einem der vorhergehenden Ansprüche, **dadurch gekennzeichnet, dass** es sich bei dem Reaktivgas um ein Abgas handelt, ausgewählt aus der Liste umfassend Abgase aus thermischen Verfahren wie Verbrennungsprozessen, der Zementproduktion und der Stahlherstellung sowie Kohlendioxid aus Fermentationsprozessen.

**9.** Verfahren nach einem der vorhergehenden Ansprüche, **dadurch gekennzeichnet, dass** es bei einem Druck des Reaktivgases von 100 Hektopascal bis 50000 Hektopascal durchgeführt wird.

10. Verfahren nach einem der vorhergehenden Ansprüche, **dadurch gekennzeichnet, dass** es bei einer Temperatur von 0 °C bis 300 °C durchgeführt wird.

11. Verfahren nach einem der vorhergehenden Ansprüche, **dadurch gekennzeichnet, dass** das Reaktivgas einen $CO_2$-Gehalt von über 0,1 % (v/v) aufweist.

12. Vorrichtung für die Durchführung eines Verfahrens zur Carbonatisierung mindestens eines alkalischen Feststoffs gemäß einem der Ansprüche 1 bis 11, umfassend einen Reaktor **(100), dadurch gekennzeichnet, dass** der Reaktor **(100)** die folgenden Teile umfasst,

    a. eine Reaktorkammer **(1),** durch die der Reaktionsraum **(8)** von der Umgebungsluft getrennt ist,
    b. ein in der Reaktorkammer **(1)** entlang der Drehachse angeordnetes Rohr **(3),**
    c. einen Ableitungsbereich **(3a)** des Rohres **(3)** zur Ableitung von Reaktivgas und/oder alkalischem Feststoff aus der Reaktorkammer **(1)** und einen Einleitungsbereich **(3b)** des Rohres **(3)** zur Einleitung von Reaktivgas und/oder alkalischem Feststoff in die Reaktorkammer **(1),**
    d. mindestens eine Trennwand **(6)** im Rohr **(3),** die den Ableitungsbereich **(3a)** des Rohres **(3)** vom Einleitungsbereich **(3b)** gasdicht abtrennt,
    e. mindestens eine Ausströmöffnung **(7b)** im Einleitungsbereich **(3b)** des Rohres **(3)** zur Überführung von Reaktivgas und/oder alkalischem Feststoff aus dem Einleitungsbereich **(3b)** des Rohres **(3)** in die Reaktorkammer **(1),**
    f. mindestens eine Einströmöffnung **(7a)** im Ableitungsbereich **(3a)** des Rohres **(3)** zur Überführung von Reaktivgas und/oder alkalischem Feststoff aus der Reaktorkammer **(1)** in den Ableitungsbereich **(3a)** des Rohres **(3),**
    g. mindestens eine reversibel und wiederholt verschließbare Öffnung **(1a)** in der Reaktorkammer **(1)** für Wartungsarbeiten oder die chargenweise Zugabe von alkalischem Feststoff,
    h. eine Steuereinheit **(15)** zur Steuerung oder Regelung des Verfahrens, einen Sensor **(13)** zur Erfassung und Weiterleitung des Reaktivgasdrucks in der Reaktorkammer **(1)** an die Steuereinheit **(15),** und einen Sensor **(14)** zur Erfassung und Weiterleitung der Temperatur in der Reaktorkammer **(1)** an die Steuereinheit **(15),** wobei die Weiterleitung der Signale der Sensoren **(13), (14)** zur Steuereinheit **(15)** über Kabelverbindungen oder durch Funkübertragung erfolgt.

13. Vorrichtung gemäß Anspruch 12, **dadurch gekennzeichnet, dass** das Rohr **(3)** an den Enden mittels Drehkupplungen **(4a, 4b)** drehbar und zumindest teilweise gasdicht an nicht drehbaren Anschlussrohren **(5a, 5b)** befestigt ist, und die Vorrichtung einen Sensor **(12)** aufweist, mit dem die Drehgeschwindigkeit der Reaktorkammer **(1)** erfasst und der Steuereinheit **(15)** zugeleitet wird, wobei die Weiterleitung der Signale des Sensors **(12)** zur Steuereinheit **(15)** über eine Kabelverbindung oder durch Funkübertragung erfolgt.

## Claims

1. Process for the carbonation of at least one alkaline solid, **characterized in that** it is carried out in a reactor **(100)** having a rotatably mounted reactor chamber **(1)** and comprises the following steps,

    a) feeding $CO_2$-containing reactive gas and at least one alkaline solid into the reactor **(100)** under exclusion of ambient air, so that carbonation takes place, and
    b) the removal of the reactive gas used and the carbonated solid
    from the reactor **(100),**
    wherein

        - the solid material is constantly moved by rotation of the rotatably mounted reactor chamber **(1),** and the rotational speed of the reactor chamber is between 10 rotations per minute and 1 rotation per hour;
        - the supply and discharge of the $CO_2$-containing gas takes place via pipe **(3)** and the connecting pipes **(5a, 5b);**
        - the process is controlled or regulated via a control unit **(15).**

2. Process according to claim 1, **characterised in that** after step b) a further process step is included, comprising c) at least one washing step of the carbonated solids with water.

3. Process according to any one of the preceding claims, **characterized in that** after step b) and/or step c) at least one further step is carried out comprising

i) taking at least one sample of the at least one carbonated solid,
ii) preparing an eluate from the sample from step i),
iii) determining a heavy metal concentration in the eluate from step ii) and
iv) comparing the heavy metal concentration from step iii) with a reference value, whereat the result of this comparison is used to control or regulate the process.

4. Process according to claim 3, **characterized in that** in the determination of the heavy metal concentration according to step iii) a method is used comprising

$\alpha$) the determination of the electrical conductivity of the eluate from step ii) and
$\beta$) the conversion of the electrical conductivity from step $\alpha$) into the heavy metal concentration using equation 1,

$$c = a \cdot e^{(b \cdot LF - c)} \quad (1),$$

whereat

e is the base of the natural logarithm (Euler's number, 2.718...),
LF is the electrical conductivity,
c is the heavy metal concentration, and
a, b and c are experimentally determined parameters of equation 1 which are determined by means of comparative experiments, graphically plotting the values of the electrical conductivities of eluates of different concentration against the heavy metal concentrations of the eluates and determining a compensation curve.

5. Process according to claim 4, **characterized in that** the experimentally determined parameters a, b and c of equation 1 have values within the following ranges:

$0,5 \leq a \leq 1,3$ ;
$0,6 \leq b \leq 1,8$ ;
$5,2 \leq c \leq 9,2$.

6. Process according to any one of claims 3 to 5, **characterised in that** the at least one particular heavy metal concentration is the concentration of a heavy metal selected from the list comprising lead, copper, zinc, arsenic, cadmium, nickel, barium, chromium, molybdenum, antimony, selenium and vanadium.

7. Process according to any one of the preceding claims, **characterised in that** the at least one alkaline solid is grate ash or fly ash.

8. Process according to any one of the preceding claims, **characterised in that** the reactive gas is an exhaust gas selected from the list comprising exhaust gas from thermal processes such as combustion processes, cement production, steel production, and carbon dioxide from fermentation processes.

9. Process according to one of the preceding claims, **characterized in that** it is carried out at a pressure of the reactive gas of 100 hectopascal to 50000 hectopascal.

10. Process according to any one of the preceding claims, **characterised in that** it is carried out at a temperature of 0°C to 300°C.

11. Process according to any one of the preceding claims, **characterized in that** the reactive gas has a $CO_2$ content of more than 0.1% (v/v).

12. Apparatus for carrying out a process for the carbonation of at least one alkaline solid according to any one of claims 1 to 11, comprising a reactor **(100), characterized in that** the reactor **(100)** comprises the following parts,

a. a reactor chamber **(1)** through which the reaction space **(8)** is separated from the ambient air,

b. a tube **(3)** arranged in the reactor chamber **(1)** along the axis of rotation,

c. a discharge region **(3a)** of the tube **(3)** for discharging reactive gas and/or alkaline solid from the reactor chamber **(1)** and an inlet region **(3b)** of the tube **(3)** for introducing reactive gas and/or alkaline solid into the reactor chamber **(1),**

d. at least one partition **(6)** in the pipe **(3)** which separates the discharge region **(3a)** of the pipe **(3)** from the inlet region **(3b)** in a gas-tight manner,

e. at least one outflow opening **(7b)** in the inlet region **(3b)** of the pipe **(3)** for transferring reactive gas and/or alkaline solids from the inlet region **(3b)** of the pipe **(3)** into the reactor chamber **(1),**

f. at least one inflow opening **(7a)** in the discharge region **(3a)** of the pipe **(3)** for transferring reactive gas and/or alkaline solid from the reactor chamber **(1)** into the discharge region **(3a)** of the pipe **(3),**

g. at least one reversible and repeatedly closable opening **(1a)** in the reactor chamber **(1)** for maintenance work or the batchwise addition of alkaline solids,

h. a control unit **(15)** for controlling or regulating the process, a sensor **(13)** for detecting and transmitting the reactive gas pressure in the reactor chamber **(1)** to the control unit **(15),** and a sensor **(14)** for detecting and transmitting the temperature in the reactor chamber **(1)** to the control unit **(15),** the signals from the sensors **(13), (14)** being transmitted to the control unit **(15)** via cable connections or by radio transmission.

**13.** Device according to claim 12, **characterised in that** the tube **(3)** is attached rotatably at the ends by means of rotary couplings **(4a, 4b)** and at least partially gas-tightly to non-rotatable connecting tubes **(5a, 5b),** and the device has a sensor **(12)** with which the rotational speed of the reactor chamber **(1)** is detected and fed to the control unit **(15),** the forwarding of the signals of the sensor **(12)** to the control unit **(15)** being effected via a cable connection or by radio transmission.

## Revendications

**1.** Procédé de carbonatation d'au moins un solide alcalin, **caractérisé en ce qu'**il est réalisé dans un réacteur **(100)** ayant une chambre de réacteur **(1)** montée de manière rotative et comprend les étapes suivantes,

a) alimentation en gaz réactif contenant du $CO_2$ et au moins et d'au moins un solide alcalin dans le réacteur **(100)** avec les exclusion l'air ambiant de manière à ce que la carbonatation se produise, et

b) l'élimination du gaz réactif utilisé et le solide carbonaté du réacteur **(100),**

où

- le matériau solide est constamment déplacé par la rotation de la chambre du réacteur montée de façon rotative **(1),** et la vitesse de rotation de la chambre du réacteur est comprise entre 10 tours par minute et 1 tour par heure;
- l'alimentation et l'évacuation du gaz contenant du $CO_2$ par une conduite **(3)** et les tuyaux de raccordement **(5a, 5b);**
- le processus est contrôlé ou régulé par une unité de contrôle **(15).**

**2.** Procédé selon la revendication 1, **caractérisé en ce qu'**après l'étape b), une autre étape du procédé est connectée, comprenant c) au moins une étape de lavage des solides carbonatés avec de l'eau.

**3.** Procédé selon l'une quelconque des revendications précédentes, **caractérisé en ce qu'**après l'étape b) et/ou l'étape c), on effectue au moins une autre étape de procédé comprenant

i) prélever au moins un échantillon de l'au moins un solide carbonaté,

ii) préparer un éluat à partir de l'échantillon de l'étape i),

iii) déterminer une concentration de métaux lourds dans l'éluat de l'étape ii), et

iv) comparaison de la concentration de métaux lourds de l'étape iii) avec une valeur de référence, le résultat de cette la comparaison est utilisée pour contrôler ou réguler le processus.

**4.** Procédé selon la revendication 3, **caractérisé en ce que**, pour la détermination de la concentration en métaux lourds selon l'étape iii), on utilise un procédé comprenant les étapes suivantes

a) la détermination de la conductivité électrique de l'éluat de l'étape ii) et

β) la conversion de la conductivité électrique de l'étape a) dans la concentration de métaux lourds en utilisant équation 1,

$$c = a \cdot e^{(b \cdot LF - c)} \quad (1),$$

où

e est la base du logarithme naturel (nombre d'Euler), 2.718...),
LF est la conductivité électrique,
c est la concentration en métaux lourds, et
a, b et c sont des paramètres déterminés expérimentalement de l'équation 1 qui sont déterminées au moyen d'expériences comparatives, en comparant les valeurs de la conductivité électrique des éluats en fonction de la concentration en métaux lourds des éluats, des éluats sont tracés graphiquement, et une courbe de compensation est déterminée.

**5.** Procédé selon la revendication 4, **caractérisé en ce que** les paramètres a, b et c de l'équation 1, déterminés de manière expérimentale, ont des valeurs comprises dans les plages suivantes:

$0,5 \leq a \leq 1,3$ ;
$0,6 \leq b \leq 1,8$ ;
$5,2 \leq c \leq 9,2$ .

**6.** Procédé selon l'une quelconque des revendications 3 à 5, **caractérisé en ce que** l'au moins une concentration particulière en métal lourd est la concentration d'un métal lourd choisi dans la liste comprenant le plomb, le cuivre, le zinc, l'arsenic, le cadmium, le nickel, le baryum, le chrome, le molybdène, l'antimoine, le sélénium et le vanadium.

**7.** Procédé selon l'une quelconque des revendications précédentes, **caractérisé en ce que** le au moins un solide alcalin est une cendre de grille ou une cendre volante.

**8.** Procédé selon l'une quelconque des revendications précédentes, **caractérisé en ce que** le gaz réactif est un gaz d'échappement choisi dans la liste comprenant les gaz d'échappement provenant de processus thermiques tels que les processus de combustion, la production de ciment et la production d'acier, et le dioxyde de carbone provenant de processus de fermentation.

**9.** Procédé selon l'une des revendications précédentes, **caractérisé en ce qu'**il est mis en oeuvre à une pression du gaz réactif de 100 hectopascal à 50000 hectopascal.

**10.** Procédé selon l'une quelconque des revendications précédentes, **caractérisé en ce qu'**il est mis en oeuvre à une température de 0°C à 300°C.

**11.** Procédé selon l'une quelconque des revendications précédentes, **caractérisé en ce que** le gaz réactif a une teneur en $CO_2$ supérieure à 0,1% (v/v).

**12.** Appareil pour réaliser un procédé de carbonatation d'au moins un solide alcalin selon l'une quelconque des revendications 1 à 11, comprenant un réacteur **(100), caractérisé en ce que** le réacteur **(100)** comprend les parties suivantes,

a. une chambre de réacteur **(1)** à travers laquelle la chambre de réaction **(8)** est séparée de l'air ambiant,
b. un tube **(3)** disposé dans la chambre du réacteur **(1)** le long de l'axe de rotation,
c. une région de décharge **(3a)** du tube **(3)** pour décharger le gaz réactif et/ou le solide alcalin de la chambre du réacteur **(1)** et une région d'introduction **(3b)** du tube **(3)** pour introduire le gaz réactif et/ou le solide alcalin dans la chambre du réacteur **(1),**
d. au moins une cloison **(6)** dans le tuyau **(3)** qui sépare de manière étanche au gaz le région de décharge **(3a)** du tuyau **(3)** de la région d'introduction **(3b),**
e. au moins une ouverture d'écoulement **(7b)** dans la région d'introduction **(3b)** du tuyau **(3)** pour transférer le gaz réactif et/ou les solides alcalins de la région d'introduction **(3b)** du tuyau **(3)** dans la chambre du réacteur **(1),**
f. au moins une ouverture d'entrée **(7a)** dans la région de décharge **(3a)** du tuyau **(3)** pour transférer le gaz réactif et/ou le solide alcalin de la chambre du réacteur **(1)** dans la région de décharge **(3a)** du tuyau **(3),**

g. au moins une ouverture **(1a)** réversible et pouvant être fermée à plusieurs reprises dans la chambre du réacteur **(1)** pour les travaux de maintenance ou l'ajout par lots de solides alcalins,
h. une unité de commande **(15)** pour la commande ou la régulation du processus, un capteur **(13)** pour la détection et la transmission de la pression du gaz réactif dans l'enceinte du réacteur **(1)** à l'unité de commande **(15),** et un capteur **(14)** pour la détection et la transmission de la température dans l'enceinte du réacteur **(1)** à l'unité de commande **(15),** les signaux des capteurs **(13), (14)** étant transmis à l'unité de commande **(15)** par des liaisons par câble ou par transmission radio.

**13.** Appareil selon la revendication 12, **caractérisé en ce que** le tube **(3)** est fixé de manière rotative aux extrémités au moyen d'accouplements rotatifs **(4a, 4b)** et au moins partiellement de manière étanche aux gaz à des tubes de raccordement non rotatifs **(5a, 5b),** et le dispositif présente un capteur **(12)** avec lequel la vitesse de rotation de la chambre de réacteur **(1)** est détectée et amenée à l'unité de commande **(15),** la transmission des signaux du capteur **(12)** à l'unité de commande **(15)** étant effectuée par une liaison par câble ou par transmission radio.

Fig. 1

Tabelle 1

| Versuch Nr. | $\dot{V}$ | $t_{res}$ | $M_{Asche}$ | Versuch Nr. | $\dot{V}$ | $t_{res}$ | $M_{Asche}$ |
|---|---|---|---|---|---|---|---|
| | [L/min] | [min] | [kg] | | [L/min] | [min] | [kg] |
| 11 | 40 | 20 | 6 | 27 | 60 | 100 | 8 |
| 6 | 20 | 60 | 8 | 5 | 20 | 60 | 6 |
| 17 | 40 | 100 | 6 | 15 | 40 | 60 | 8 |
| 24 | 60 | 60 | 8 | 14 | 40 | 60 | 6 |
| 23 | 60 | 60 | 6 | 3 | 20 | 20 | 8 |
| 9 | 20 | 100 | 8 | 26 | 60 | 100 | 6 |
| 1 | 20 | 20 | 4 | 20 | 60 | 20 | 6 |
| 16 | 40 | 100 | 4 | 13 | 40 | 60 | 4 |
| 19 | 60 | 20 | 4 | 18 | 40 | 100 | 8 |
| 8 | 20 | 100 | 6 | 22 | 60 | 60 | 4 |
| 10 | 40 | 20 | 4 | 7 | 20 | 100 | 4 |
| 25 | 60 | 100 | 4 | 4 | 20 | 60 | 4 |
| 2 | 20 | 20 | 6 | 21 | 60 | 20 | 8 |
| 12 | 40 | 20 | 8 | 28 | 40 | 80 | 8 |

Fig. 2A

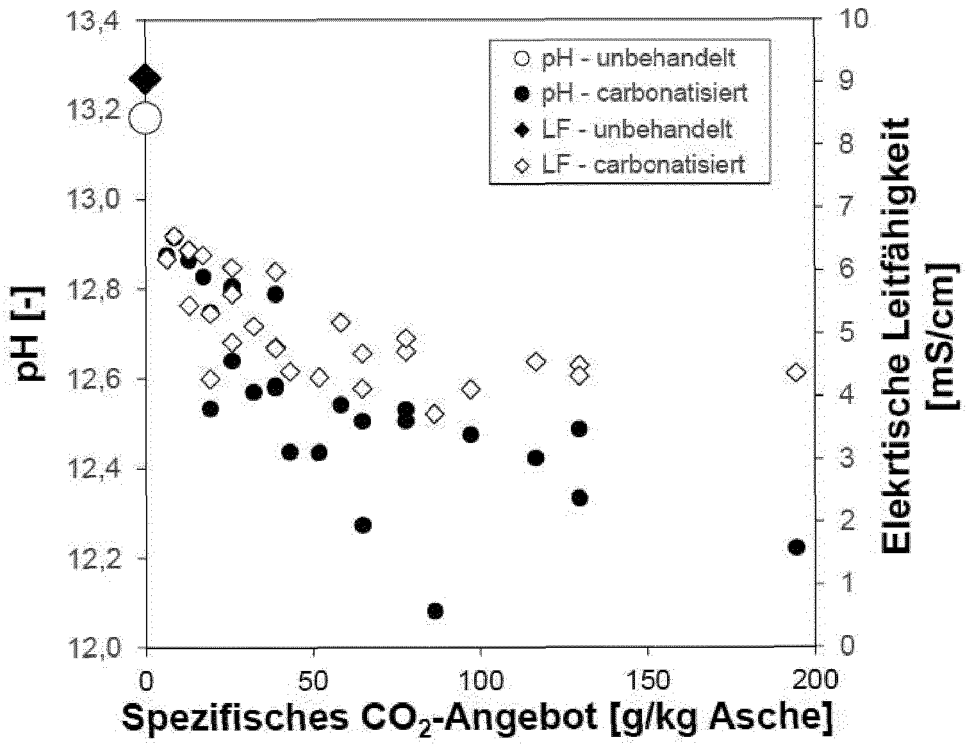
pH - unbehandelt
pH - carbonatisiert
LF - unbehandelt
LF - carbonatisiert
pH [-]
Elekrtische Leitfähigkeit [mS/cm]
Spezifisches $CO_2$-Angebot [g/kg Asche]

Fig. 2B

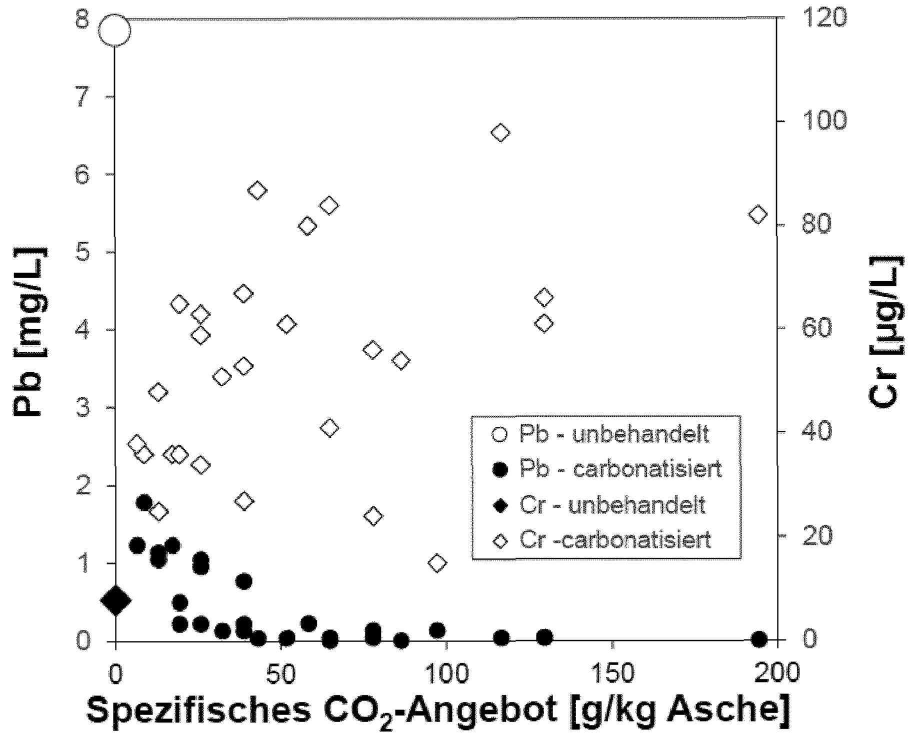
Pb - unbehandelt
Pb - carbonatisiert
Cr - unbehandelt
Cr -carbonatisiert
Pb [mg/L]
Cr [µg/L]
Spezifisches $CO_2$-Angebot [g/kg Asche]

Fig. 3

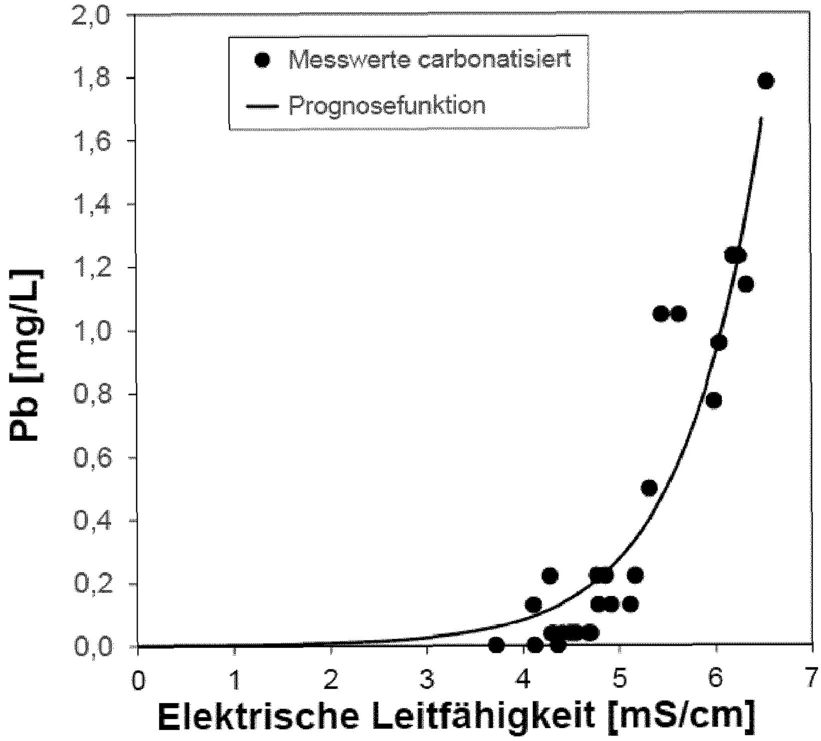
2,0
1,8
1,6
1,4
1,2
1,0
0,8
0,6
0,4
0,2
0,0
Pb [mg/L]
Messwerte carbonatisiert
Prognosefunktion
0
1
2
3
4
5
6
7
Elektrische Leitfähigkeit [mS/cm]

Fig. 4A

Tabelle 2

| Versuch Nr. | Summenparameter S4-Eluat | | | Schwermetallkonzentrationen S4-Eluat | | | | | | | | | | | | |
|---|---|---|---|---|---|---|---|---|---|---|---|---|---|---|---|---|
| | pH-Wert Eluat [-] | el. Leitf. Eluat [mS/cm] | Redox-potenzial [mV] | Pb [mg/L] | V [µg/L] | Cr [µg/L] | Co [µg/L] | Ni [µg/L] | Zn [µg/L] | As [µg/L] | Se [µg/L] | Mo [µg/L] | Cd [µg/L] | Sb [µg/L] | Cu [µg/L] | Ba [µg/L] |
| Ref. | 13,18 | 9,06 | -56 | 7,85 | 0 | 8 | 0 | 0 | 1258 | 0 | 1 | 108 | 0 | 1 | 693 | 586 |
| 1 | 12,86 | 6,33 | -36 | 1,14 | 1 | 48 | 0 | 1 | 432 | 0 | 0 | 148 | 0 | 1 | 210 | 290 |
| 2 | 12,92 | 6,55 | -23 | 1,78 | 1 | 36 | 0 | 1 | 578 | 0 | 1 | 127 | 0 | 1 | 260 | 280 |
| 3 | 12,88 | 6,19 | -28 | 1,23 | 1 | 38 | 0 | 2 | 415 | 0 | 1 | 125 | 0 | 1 | 170 | 240 |
| 4 | 12,58 | 4,79 | -21 | 0,13 | 2 | 27 | 0 | 2 | 101 | 0 | 2 | 135 | 0 | 1 | 120 | 200 |
| 5 | 12,64 | 4,86 | -19 | 0,22 | 2 | 59 | 0 | 2 | 98 | 0 | 2 | 133 | 0 | 1 | 100 | 180 |
| 6 | 12,53 | 4,28 | 17 | 0,22 | 2 | 65 | 0 | 2 | 134 | 0 | 1 | 142 | 0 | 1 | 150 | 240 |
| 7 | 12,50 | 4,68 | -19 | 0,04 | 2 | 84 | 0 | 1 | 75 | 0 | 1 | 145 | 0 | 1 | 110 | 270 |
| 8 | 12,44 | 4,40 | -23 | 0,04 | 3 | 87 | 0 | 2 | 63 | 0 | 1 | 127 | 0 | 1 | 90 | 200 |
| 9 | 12,57 | 5,12 | -7 | 0,13 | 3 | 51 | 0 | 1 | 83 | 0 | 1 | 130 | 0 | 1 | 75 | 175 |
| 10 | 12,80 | 6,05 | -23 | 0,95 | 1 | 63 | 0 | 1 | 351 | 0 | 1 | 145 | 0 | 1 | 100 | 230 |
| 11 | 12,83 | 6,25 | -27 | 1,23 | 1 | 36 | 0 | 2 | 633 | 0 | 2 | 136 | 0 | 1 | 155 | 230 |
| 12 | 12,88 | 5,45 | -30 | 1,05 | 1 | 25 | 0 | 1 | 343 | 0 | 1 | 115 | 0 | 1 | 115 | 460 |
| 13 | 12,51 | 4,71 | 18 | 0,04 | 2 | 24 | 0 | 2 | 43 | 0 | 1 | 135 | 0 | 1 | 60 | 265 |
| 14 | 12,44 | 4,30 | -3 | 0,04 | 3 | 61 | 0 | 2 | 37 | 0 | 1 | 125 | 0 | 1 | 65 | 285 |
| 15 | 12,59 | 4,77 | 16 | 0,22 | 2 | 67 | 0 | 2 | 77 | 0 | 1 | 132 | 0 | 1 | 75 | 265 |
| 16 | 12,33 | 4,49 | -8 | 0,04 | 4 | 61 | 0 | 2 | 28 | 0 | 1 | 147 | 0 | 2 | 55 | 220 |
| 17 | 12,08 | 3,72 | 36 | 0,00 | 5 | 54 | 0 | 1 | 25 | 0 | 1 | 124 | 0 | 1 | 60 | 195 |
| 18 | 12,27 | 4,12 | 22 | 0,00 | 5 | 41 | 0 | 2 | 20 | 0 | 0 | 132 | 0 | 1 | 50 | 260 |
| 19 | 12,79 | 5,99 | -12 | 0,77 | 1 | 53 | 0 | 3 | 375 | 0 | 2 | 127 | 0 | 1 | 105 | 225 |
| 20 | 12,81 | 5,63 | -22 | 1,05 | 1 | 34 | 0 | 2 | 225 | 0 | 1 | 134 | 0 | 1 | 110 | 350 |

Fig. 4A ( Fortsetzung)

Tabelle 2 (Fortsetzung)

| Versuch Nr. | Summenparameter S4-Eluat | | | Schwermetallkonzentrationen S4-Eluat | | | | | | | | | | | | |
|---|---|---|---|---|---|---|---|---|---|---|---|---|---|---|---|---|
| | pH-Wert Eluat [-] | el. Leitf. Eluat [mS/cm] | Redox-potenzial [mV] | Pb [mg/L] | V [µg/L] | Cr [µg/L] | Co [µg/L] | Ni [µg/L] | Zn [µg/L] | As [µg/L] | Se [µg/L] | Mo [µg/L] | Cd [µg/L] | Sb [µg/L] | Cu [µg/L] | Ba [µg/L] |
| 21 | 12,75 | 5,32 | -18 | 0,50 | 1 | 36 | 0 | 1 | 168 | 0 | 1 | 111 | 0 | 1 | 105 | 365 |
| 22 | 12,42 | 4,55 | -45 | 0,04 | 3 | 98 | 0 | 2 | 60 | 0 | 0 | 127 | 0 | 1 | 80 | 205 |
| 23 | 12,53 | 4,92 | -5 | 0,13 | 3 | 56 | 0 | 1 | 98 | 0 | 2 | 120 | 0 | 1 | 85 | 195 |
| 24 | 12,54 | 5,17 | -14 | 0,22 | 2 | 80 | 0 | 1 | 99 | 0 | 1 | 120 | 0 | 1 | 90 | 170 |
| 25 | 12,22 | 4,36 | -22 | 0,00 | 5 | 82 | 0 | 2 | 23 | 0 | 2 | 140 | 0 | 1 | 65 | 185 |
| 26 | 12,49 | 4,32 | -9 | 0,04 | 4 | 66 | 0 | 2 | 15 | 0 | 1 | 127 | 0 | 1 | 60 | 195 |
| 27 | 12,47 | 4,11 | -20 | 0,13 | 3 | 15 | 0 | 1 | 29 | 0 | 1 | 120 | 0 | 1 | 55 | 230 |
| 28 | 11,60 | 4,10 | - | 0,04 | 6 | 21 | - | 3 | 12 | 0 | 1 | 137 | 0 | 2 | 78 | 238 |

Fig. 4B

Tabelle 3

| Parameter | Einheit | S4 Eluat | | Zuordnungswert gem. Deponieverordnung | | | Säuleneluat | | Materialwerte gem. Ersatzbaustoffverordnung | |
|---|---|---|---|---|---|---|---|---|---|---|
| | | S4 Original | S4 Eluat Versuch Nr. 28 | DK 0 | DK I | DK II | Säuleneluat Original | Säuleneluat Versuch Nr. 28 | HMVA-1 | HMVA-2 |
| Chemisch-physikalische Parameter | | | | | | | | | | |
| pH-Wert | [-] | 13,2 | 11,6 | 5,5 - 13 | 5,5 - 13 | 5,5 - 13 | 12,4 | 11,4 | 7 -13 | 7 - 13 |
| LF | [µS/cm] | 9.061 | 4.100 | k.A. | k.A. | k.A. | 17560 | 11.800 | 10.000 | 10.000 |
| Metalle / Metalloide | | | | | | | | | | |
| Arsen | [µg/L] | 0 | 0 | ≤ 50 | ≤ 200 | ≤ 200 | 0 | 0 | k.A. | k.A. |
| Blei | [µg/L] | 7.280 | 40 | ≤ 50 | ≤ 200 | ≤ 1000 | 5050 | 40 | k.A. | k.A. |
| Cadmium | [µg/L] | 0 | 0 | ≤ 4 | ≤ 50 | ≤ 100 | 0 | 0 | k.A. | k.A. |
| Kupfer | [µg/L] | 693 | 78,3 | ≤ 200 | ≤ 500 | ≤ 1000 | 195 | 90 | 1.000 | 2.000 |
| Nickel | [µg/L] | 0 | 2,67 | ≤ 40 | ≤ 200 | ≤ 1000 | 5 | 4 | k.A. | k.A. |
| Zink | [µg/L] | 1260 | 12,3 | ≤ 400 | ≤ 2000 | ≤ 5000 | 524 | 7 | k.A. | k.A. |
| Barium | [µg/L] | 586 | 238 | ≤ 2.000 | ≤ 5.000 | ≤ 10000 | 695 | 320 | k.A. | k.A. |
| Chrom, ges. | [µg/L] | 7,89 | 20,7 | ≤ 50 | ≤ 300 | ≤ 1.000 | 2 | 26 | 460 | 600 |
| Molybdän | [µg/L] | 108 | 137 | ≤ 50 | ≤ 300 | ≤ 1.000 | 270 | 340 | 400 | 1.000 |
| Antimon | [µg/L] | 1,00 | 1,67 | ≤ 6 | ≤ 30 | ≤ 70 | 2 | 3 | 57 | 150 |
| Selen | [µg/L] | 1,00 | 1,00 | ≤ 10 | ≤ 30 | ≤ 50 | 2 | 2 | n.a. | n.a. |
| Vanadium | [µg/L] | 0,22 | 6,33 | n.a. | n.a. | n.a. | 2 | 7 | 150 | 200 |
| Anionen | | | | | | | | | | |
| Chlorid | [mg/L] | 875 | **862** | ≤ 80 | ≤ 1500 | ≤ 1500 | 3628 | **3614** | 3.000 | 3.000 |
| Sulfat | [mg/L] | 51 | **227** | ≤ 100 | ≤ 2000 | ≤ 2000 | 216 | **273** | 2000 | 2000 |

Fig. 5

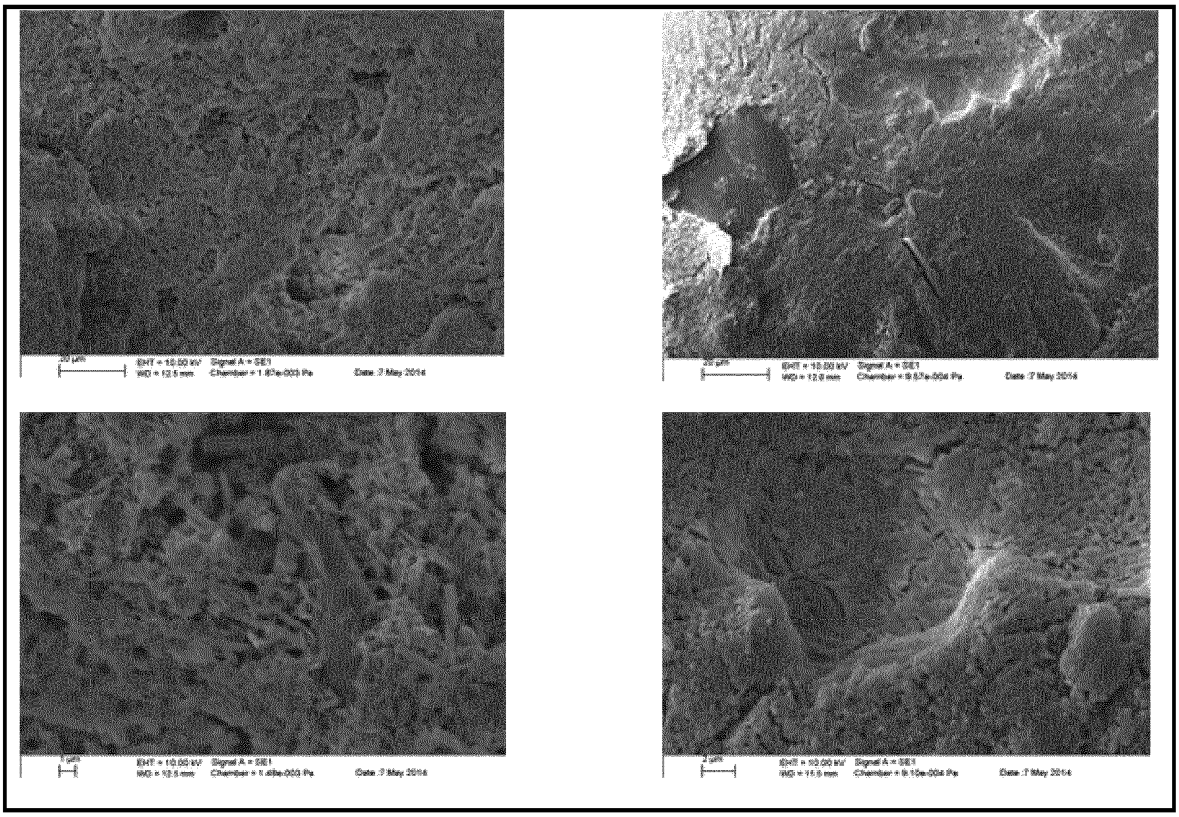

Fig. 6

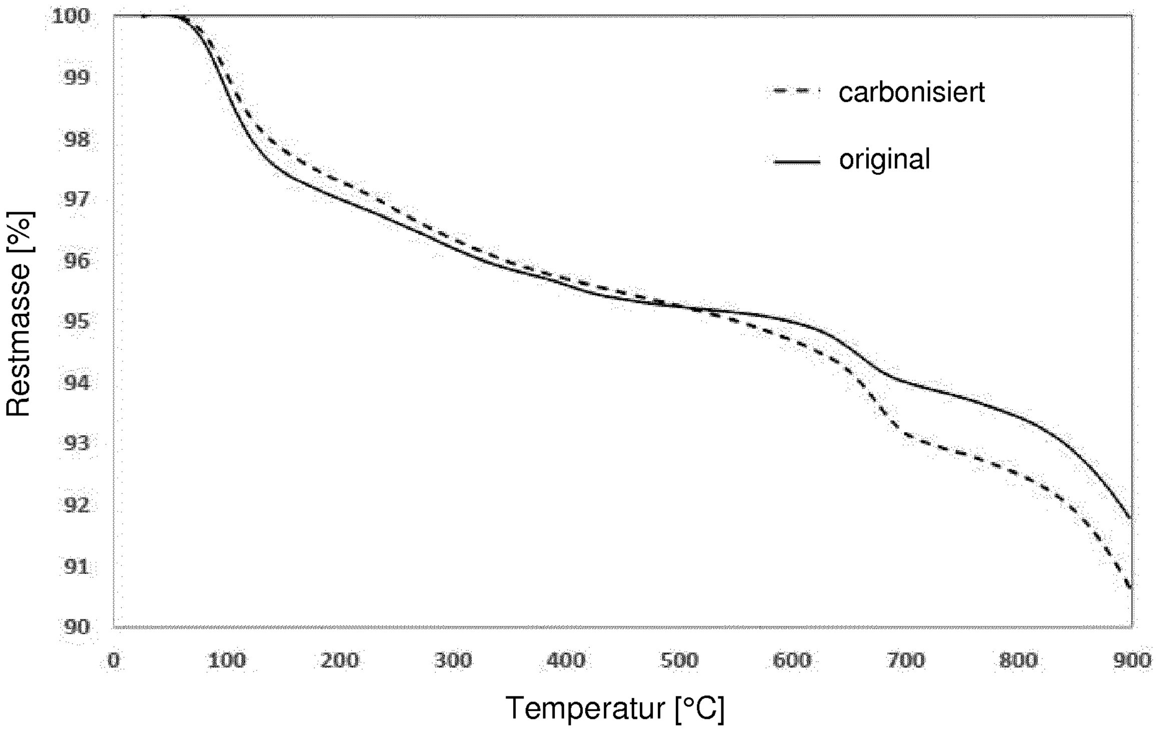
carbonisiert
original
Restmasse [%]
Temperatur [°C]
100
99
98
97
96
95
94
93
92
91
90
0
100
200
300
400
500
600
700
800
900

Fig. 7

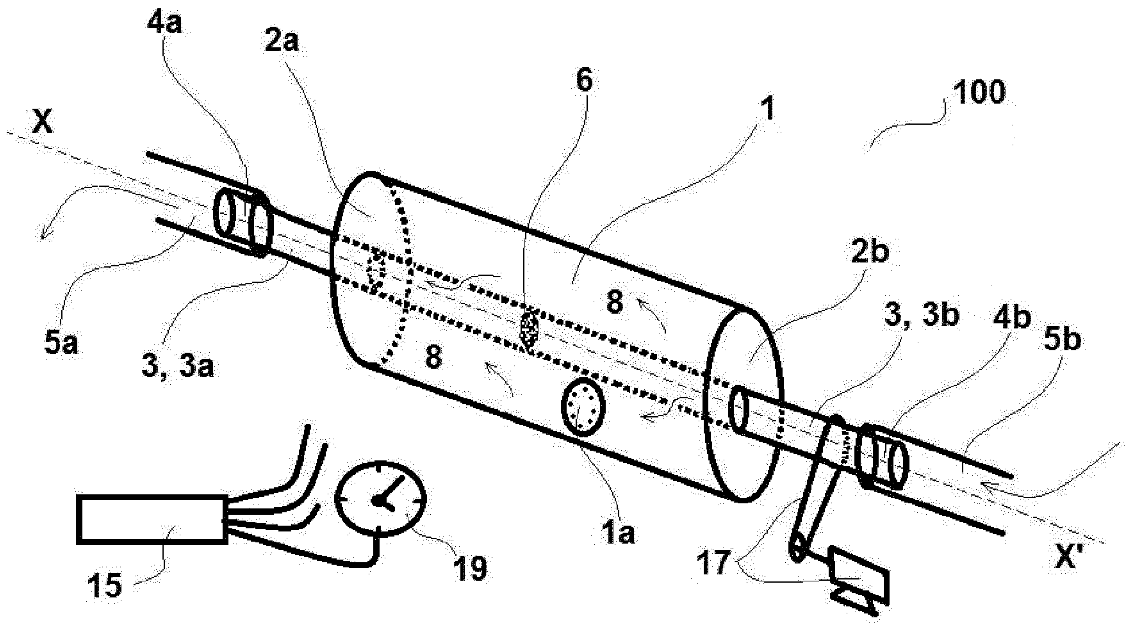
4a
2a
6
1
100
X
2b
8
3, 3b
4b
5b
5a
3, 3a
8
1a
15
19
17
X'

Fig. 8

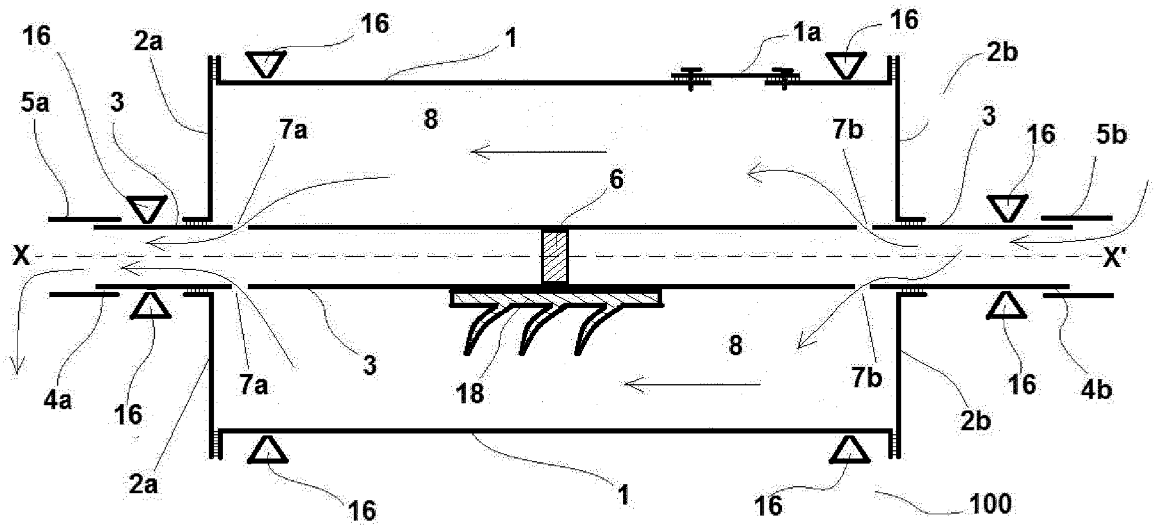
16
2a
16
1
1a
16
2b
5a
3
7a
8
7b
3
16
5b
6
X
X'
8
4a
16
7a
3
18
7b
16
4b
2b
2a
16
1
16
100

Fig. 9

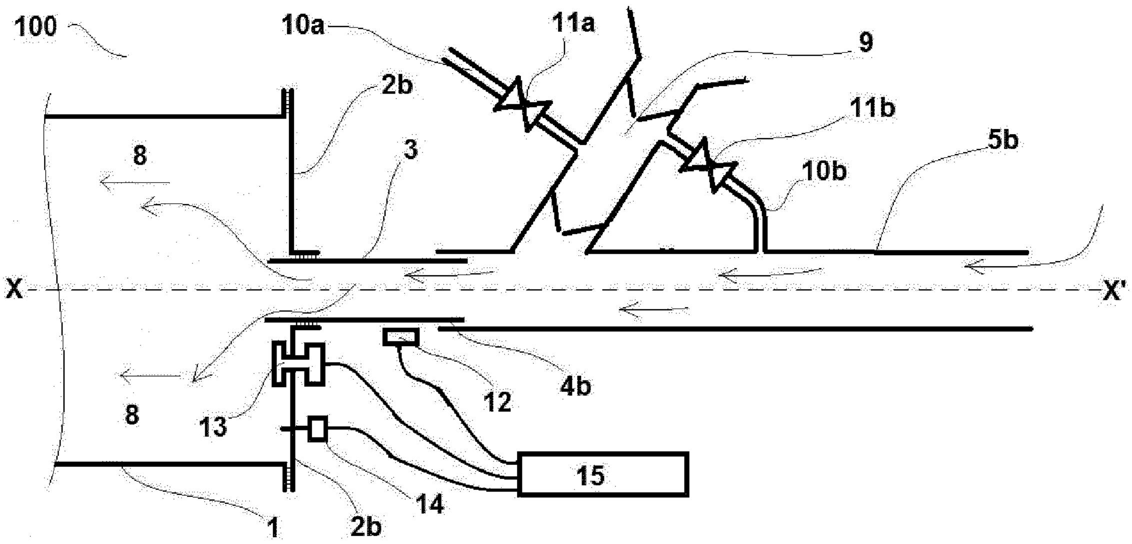
100
10a
11a
9
2b
11b
5b
8
3
10b
X
X'
4b
12
8
13
15
1
2b
14
2b

Fig. 10

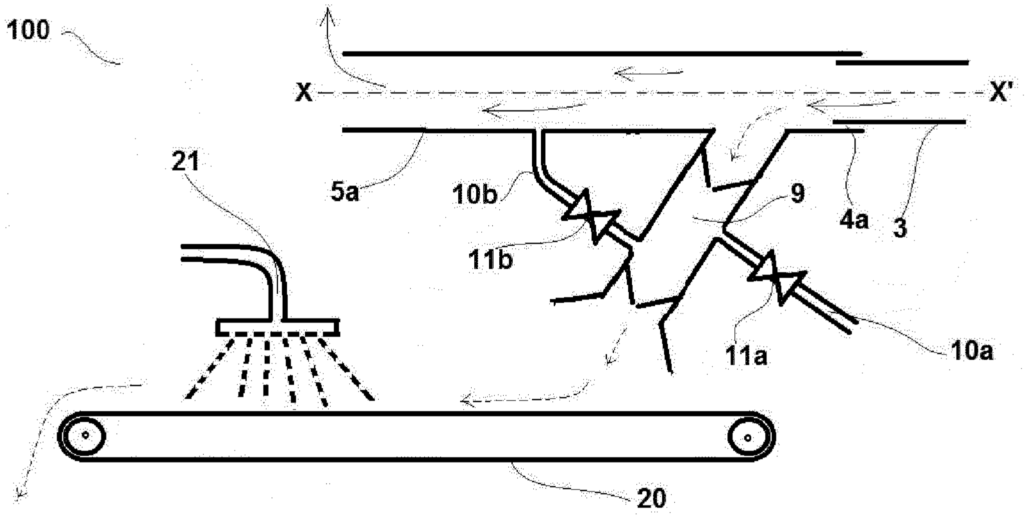
100
X
X'
21
5a
10b
9
4a
3
11b
11a
10a
20

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014088413 A2
- JP 2003145091 A


### In der Beschreibung aufgeführte Nicht-Patentliteratur


- **O. SCHIFFMANN et al.** Rückstände aus der thermischen Behandlung von Altholz
- **YUAN PAN et al.** Process Intensification of Steel Slag Carbonation via a Rotating Packed Bed: Reaction Kinetics and Mass Transfer. *Energy Procedia,* 01. Januar 2014, vol. 63, 2255-2260